(19) Europäisches Patentamt
European Patent Office
Office européen des brevets

(11) **EP 4 009 200 A1**

(12) **EUROPEAN PATENT APPLICATION**

(43) Date of publication:
**08.06.2022 Bulletin 2022/23**

(21) Application number: **21193224.9**

(22) Date of filing: **26.08.2021**

(51) International Patent Classification (IPC):
**G06F 17/11** (2006.01)  **G06N 5/00** (2006.01)
**G06Q 10/04** (2012.01)  **G06N 3/12** (2006.01)

(52) Cooperative Patent Classification (CPC):
**G06F 17/11; G06N 3/126; G06N 5/003;**
G06Q 10/04; G06Q 50/04

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.12.2020 JP 2020202515**

(71) Applicant: **FUJITSU LIMITED**
**Kawasaki-shi**
**Kanagawa 211-8588 (JP)**

(72) Inventors:
• **Maruo, Akito**
  **Kanagawa 211-8588 (JP)**
• **Soeda, Takeshi**
  **Kanagawa 211-8588 (JP)**

(74) Representative: **Hoffmann Eitle**
**Patent- und Rechtsanwälte PartmbB**
**Arabellastraße 30**
**81925 München (DE)**

(54) **OPTIMIZATION APPARATUS, OPTIMIZATION METHOD, AND COMPUTER-READABLE RECORDING MEDIUM STORING OPTIMIZATION PROGRAM**

(57)    An optimization apparatus configured to perform optimizing of an optimization problem represented by an objective function expression including a continuous variable composed of continuous value data and a discrete variable composed of discrete value data, the optimizing including: obtaining an n-th generation data value group including data values selected from the continuous value data; determining an evaluation value of each data value in the n-th generation data value group by performing optimization processing on the objective function expression by an annealing method using the n-th generation data value group; obtaining an (n+1)-th generation data value group based on the evaluation values by using a genetic algorithm, the (n+1)-th generation data value group being different from the n-th generation data value group and including data values selected from the continuous value data; and replacing the n-th generation data value group with the (n+1)-th generation data value group as the continuous variable.

FIG. 4

EP 4 009 200 A1

**Description**

FIELD

The embodiments discussed herein are related to an optimization apparatus, an optimization method, and a non-transitory computer-readable storage medium storing an optimization program.

BACKGROUND

In some development situations for materials, drug discoveries, devices, and so on, it is requested to optimize both continuous variables and discrete variables. For example, in a situation of designing a motor, the inner diameter of a magnet, the thickness of the magnet, the size of a gap, and the like are continuous variables, while the magnet arrangement (the orientations of small magnets) and the like are discrete variables.

As a method of optimizing continuous variables, a real-coded genetic algorithm (real-coded GA) is exemplified. This method is known to enable a better solution to be obtained in a practical time when used.

A specific crossover method in the real-coded GA is, for example, a method called "REX$^{star}$". In REX$^{star}$, a reflection point of each parent with respect to a position vector is created, a global descent direction is identified by obtaining the center of gravity of the individuals rated in the upper half from among the parents and the reflection points, and the distribution of the individuals is moved by a step size t in the global descent direction. In this way, REX$^{star}$ is capable of searching for a solution in a more appropriate direction than in other crossover methods in the real-coded genetic algorithm, and therefore is considered to achieve high solution search performance.

As a specific generation alternation method in the real-coded GA, there is, for example, a method called "just generation gap (JGG)". In JGG, $n_p$ individuals are randomly selected from a population of individuals and are set as parents, and $n_p$ children are selected in descending order of evaluation from children generated by performing crossover on the parents, and are set as parents for the next generation. In this way, JGG is capable of stably converging the solution with a smaller number of individuals (population size) than in the other methods.

As a technique related to optimization of discrete variables, there is a technique using an "annealing method (annealing)" capable of efficiently optimizing a combinatorial optimization problem for optimizing a combination of discrete values. For example, as the technique related to optimization of discrete variables, a technique has been proposed in which, in order to determine an optimal flight path from flight path candidates, a global search is performed using a GA, and then a local search is performed by simulated annealing (SA).

In order to efficiently optimize an optimization problem including continuous variables by using an annealing method (annealing), each of the continuous variables is divided (discretized) by a predetermined step to be expressed as discrete values and then is optimized in some cases. In this operation, since many discrete variables (bits used for calculation) have to be used when the continuous value is discretized and expressed as discrete values, which may in turn result in enormous calculation cost and difficulty of the calculation.

An example of the related art includes as follows: Japanese Laid-open Patent Publication No. 11-295098.

Another example of the related art also includes as follows: Shigenobu Kobayashi, "The Frontiers of Real-coded Genetic Algorithms", [Journal] Artificial Intelligence, Vol. 24, No. 1, pp. 147-162, 2009.

SUMMARY

[PROBLEMS]

In one aspect, an object of the present disclosure is to provide an optimization apparatus and the like capable of efficiently optimizing an optimization problem including both of continuous variables and discrete variables while saving calculation cost requested for the optimization.

[SOLUTION TO PROBLEM]

According to an aspect of the embodiments, an optimization apparatus configured to optimize an optimization problem represented by using an objective function expression including a continuous variable composed of continuous value data and a discrete variable composed of discrete value data, the optimization apparatus including: a memory; and a processor coupled to the memory, the processor being configured to perform processing, the processing including: obtaining, as the continuous variable, an n-th generation data value group ($n \geq 1$) including a plurality of data values selected from the continuous value data; determining an evaluation value of each of the plurality of data values in the n-th generation data value group by performing optimization processing on the objective function expression by an annealing method using the n-th generation data value group; obtaining an (n+1)-th generation data value group based on the evaluation values by using a genetic algorithm, the (n+1)-th generation data value group being different from the n-th generation data value group and including a plurality of data values selected from the continuous value data; and replacing the n-th generation data value group with the (n+1)-th generation data value group as the continuous variable.

[EFFECTS OF INVENTION]

In one aspect, it is possible to provide an optimization apparatus and the like capable of efficiently optimizing an optimization problem including both of continuous variables and discrete variables while saving calculation cost requested for the optimization.

BRIEF DESCRIPTION OF DRAWINGS

FIG. 1A illustrates an example of a motor;
FIG. 1B illustrates an example of a magnet in the motor;
FIG. 2 is a flowchart illustrating an example of a sequence of real-coded GA using REX$^{star}$ and JGG;
FIG. 3 illustrates an example of a search for a combination of bits that give a minimum value to an Ising model expression in a QUBO form;
FIG. 4 illustrates an example of a hardware configuration of an optimization apparatus disclosed herein;
FIG. 5 illustrates another example of a hardware configuration of the optimization apparatus disclosed herein;
FIG. 6 illustrates an example of a functional configuration of the optimization apparatus disclosed herein;
FIGs. 7A and 7B illustrate a flowchart illustrating an example of a sequence of optimization of an optimization problem represented by using an objective function expression including continuous variables composed of continuous value data and discrete variables composed of discrete value data by using an example of a technique disclosed herein;
FIG. 8 is a flowchart illustrating an example of a sequence of a short-time simple evaluation (sub-flow 1) in the example of the technique disclosed herein;
FIG. 9 is a flowchart illustrating an example of a sequence of an intensive evaluation sufficient to reach an optimal solution (sub-flow 2) in the example of the technique disclosed herein;
FIG. 10 is a flowchart illustrating an example of a sequence of determining the number of annealing iterations in each of the short-time simple evaluation and the intensive evaluation when they are switched and used, by using the example of the technique disclosed herein;
FIG. 11 is a flowchart illustrating an example of a sequence of determining parameters of a genetic algorithm in advance by using the example of the technique disclosed herein;
FIGs. 12A and 12B illustrate a flowchart illustrating an example of a detailed sequence at S602 in FIG. 11;
FIG. 13 illustrates an example of a functional configuration of an annealing machine for use in an annealing method;
FIG. 14 illustrates an example of an operation flow of a transition control unit;
FIG. 15 illustrates an example of a vibration-powered generator device to be analyzed in Example;
FIG. 16 illustrates an example of a state where a magnet MG is divided into $N_m$ small magnets;
FIG. 17 illustrates an example of correspondences between magnet state variables $s_{j,k}$ and magnetization directions in a j-th small magnet $N_j$ represented by the magnet state variables $s_{j,k}$;
FIG. 18 illustrates an example of a method of dividing a coil in Example;
FIG. 19 illustrates an example of a relationship between the number of annealing iterations for each of objective function expressions in which continuous variables were set randomly and an energy value of the objective function expression in Example;
FIG. 20 illustrates an example of a relationship between the number of annealing iterations and the analysis time requested for optimization by the annealing method for the objective function expressions in which the continuous variables were set randomly in Example;
FIG. 21 illustrates an example of a relationship between the generation number of a data value group (population) of each of objective function expressions in which different values were set as step size t and an energy value of the objective function expression in Example;
FIG. 22 illustrates an example of a relationship between the generation number of a data value group (population) of an objective function expression for optimizing coil positions and magnet arrangement in the vibration-powered generator device and an energy value of the objective function expression in Example;
FIG. 23 illustrates an example of how the coils and the magnets are arranged as a result of optimization of the coil positions and the magnet arrangement in the vibration-powered generator device in Example;
FIG. 24 illustrates an example of a sequence of processing according to an embodiment of the technique disclosed herein; and

FIG. 25 is a diagram illustrating another example of a sequence of processing according to an embodiment of the technique disclosed herein.

DESCRIPTION OF EMBODIMENTS

(Optimization Apparatus)

The technique disclosed herein is based on the findings by the inventors that the related art entails enormous calculation cost for optimizing an optimization problem including both of continuous variables and discrete variables, and therefore is incapable of efficiently optimizing such an optimization problem. In this regard, problems and others of the related art will be described in more detail before the details of the technique disclosed herein is described.

As described above, in the development situations for materials, drug discoveries, devices, and so on, the technique for optimization such as optimization of the composition of a mixture, a search for a stable structure of candidate substances for a drug, or optimization of the shape of a device by solving a combinatorial optimization problem has been proposed. Such a combinatorial optimization problem is sometimes a combinatorial optimization problem in which both of continuous variables and discrete variables are included as variables and optimization of the continuous values and optimization of the discrete values are complexly combined.

Here, examples of the optimization of continuous values in a combinatorial optimization problem include optimization of dimensions of a device, optimization of positions where to install members, optimization of a mixture ratio of substances in material development, and the like. Examples of the optimization of discrete values in a combinatorial optimization problem include optimization of the types and numbers of materials to be used, the arrangement of members, and the like.

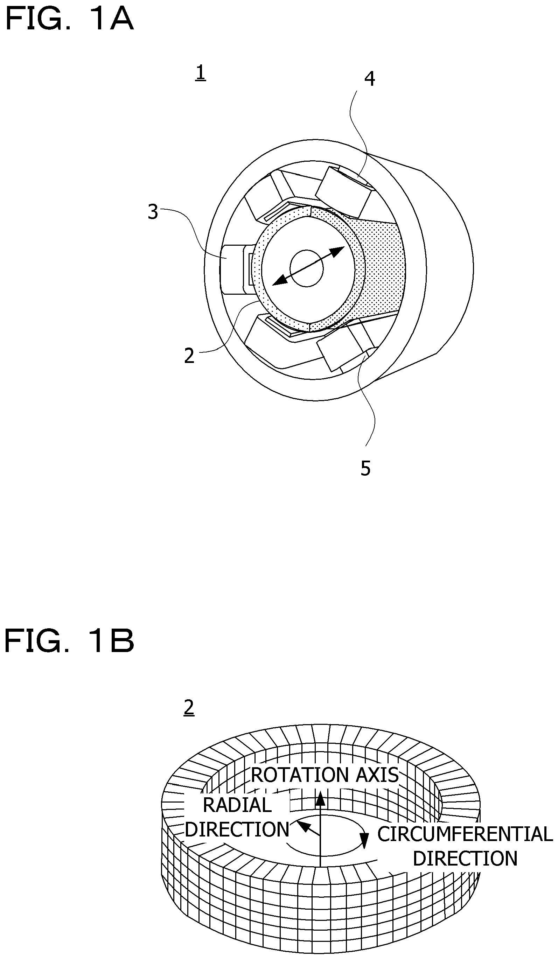

As a specific example of a combinatorial optimization problem including both of continuous variables and discrete variables as variables, considered herein is an example of optimizing a shape and others of a motor in designing the motor as illustrated in FIGs. 1A and 1B.

In the example illustrated in FIGs. 1A and 1B, a motor 1 includes a magnet 2, coils 3, poles 4, and a stator 5. As illustrated in FIG. 1B, the magnet 2 is formed of many (1080 in this example) small magnets (the magnet 2 is divided into the many small magnets).

In the example illustrated in FIGs. 1A and 1B, for example, the inner diameter of the magnet 2, the thickness of the magnet 2, the size of the gap between the magnet 2 and the coils 3, the height of each pole 4, the width of each pole 4, the thickness of the stator 5 (iron core), and the like are continuous variables. Hereinafter, such a continuous variable (parameter) may be referred to as a design parameter.

In Example, as illustrated in FIG. 1B, the orientation of each small magnet is considered to be one of seven orientations in "radial direction (+radial direction), opposite radial direction (-radial direction), circumferential direction (+circumferential direction), opposite circumferential direction (-circumferential direction), rotation axis direction (+rotation axis direction), opposite rotation axis direction (-rotation axis direction), and no magnet". In this way, as illustrated in FIG. 1B, the orientation of each small magnet may be considered to be discretized into the seven orientations, and may be expressed by discrete variables.

As described above, in the example illustrated in FIGs. 1A and 1B, for example, the inner diameter of the magnet 2, the thickness of the magnet 2, the size of the gap between the magnet 2 and the coils 3, the height of the pole 4, the width of the pole 4, and the thickness of the stator 5 (iron core) are represented by the continuous variables, whereas the orientation of each small magnet of the magnet 2 is represented by the discrete variables. Therefore, in the example illustrated in FIGs. 1A and 1B, the problem of optimizing the shape and others of the motor in designing the motor 1 is a combinatorial optimization problem including both of continuous variables and discrete variables. In the example illustrated in FIGs. 1A and 1B, in the case of optimizing the orientations of the small magnets (arrangement of the small magnets) of the magnet 2, for example, a result of the optimization of the orientations of the small magnets changes depending on the values of the design parameters that are the continuous variables.

Therefore, in order to solve (search for a solution to) a combinatorial optimization problem including both of continuous variables and discrete variables, it is requested to appropriately handle the variables in consideration of a mutual relationship between the continuous variables and the discrete variables, and to appropriately optimize both of the continuous variables and the discrete variables.

As a method of optimizing continuous variables, the real-coded genetic algorithm (real-coded GA) is exemplified as described above. In the real-coded GA, a continuous function including a continuous value as a variable is optimized by handling genes in the genetic algorithm as real-coded genes represented by a real-coded vector. In the real-coded GA, "features" of solution candidates are handled as coordinates in a parameter space, and the "similarity" between the solution candidates is evaluated as a Euclidean distance in the parameter space. By using the above real-coded GA, it is possible to increase a possibility of finding out a global solution (global minimum) and to obtain a better solution in a practical time.

The details of the real-coded GA are disclosed in literature, for example, such as "Seminar Material (Kimura), Department of Marine Systems Engineering, Graduate School of Engineering, Kyushu University, "Genetic Algorithms for Real-Coded Parameter Optimization (Japanese)" (http://sysplan.nams.kyushu-u.ac.jp/gen/edu/Algorithms/RGA_JGGandREX/RGA_JGG_REX.pdf).

As a specific crossover method in the real-coded GA, for example, the method called "REX$^{star}$" is exemplified as described above. REX$^{star}$ is considered to achieve high solution search performance because REX$^{star}$ is capable of searching for a solution in a more appropriate direction than in the other crossover methods in the real-coded genetic algorithm.

In REX$^{star}$, for example, given K parents, a reflection point of the center of gravity $x^g$ of each parent is created (a reflection is created) with respect to the center of gravity $x^g$ of the position vectors $x_1$, ..., $x_k$ of the parents. In REX$^{star}$, for example, "$x^b$-$x^g$" where $x^b$ denotes the center of gravity of the individuals rated in the upper half among the total of 2K individuals is determined as a global descent direction and children are generated by using the global descent direction. A magnitude of movement in the global descending direction is referred to as a step size t.

As a specific crossover expression in REX$^{star}$, for example, the following expression may be used.

$$x_c = x^g + diag(\xi_1^t, \cdots, \xi_n^t)(x^b - x^g) + \sum_i^{n_p} \xi_i(x_i - x^g)$$

$$\xi_j^t = U(0, t) \qquad (j = 1, 2, \cdots, n)$$

$$\xi_i = U\left(-\sqrt{\frac{3}{n_p}}, \sqrt{\frac{3}{n_p}}\right) \qquad (i = 1, 2, \cdots, n_p)$$

In the above three expressions, n denotes the number of design variables (continuous variables), $n_p$ denotes the number of parents, and U(a, b) denotes a uniform distribution in a range from a to b.

As the specific generation alternation method in the real-coded GA, for example, there is the method called "just generation gap (JGG)" as described above. JGG is capable of stably converging the solution with a smaller number of individuals (population size) than in another basic method (minimal generation gap (MGG)).

In JGG, for example, $n_p$ individuals are randomly selected from a population of individuals and are set as a parent population and crossover is applied to the parent population to generate a child population including $n_p$ children. In JGG, for example, $n_p$ children are selected in descending order of evaluation from the child population, and are set as parents for the next generation by replacing all the parents. As described above, since the number of parents is equal to the number of children in JGG, JGG is capable of stably converging the solution with a smaller number of individuals (population size) than in the other method.

The "population (generation)" in the real-coded GA means a group (collection) of data having values of continuous variables different from each other (values of different parameters).

Details of REX$^{star}$ and JGG are disclosed in, for example, the above-described literatures such as "Shigenobu Kobayashi, "The Frontiers of Real-coded Genetic Algorithms", [Journal] Artificial Intelligence, Vol. 24, No. 1, pp. 147-162, 2009" and "Takahiro Sato, "A Study on Design Optimization of Electric Devices and Machines Based on Electromagnetic Field Analysis (Japanese)", Doctor's Thesis in Annual Year 2014, Division of Systems and Information Engineering, Graduate School of Information Science and Technology, Hokkaido University, 2015".

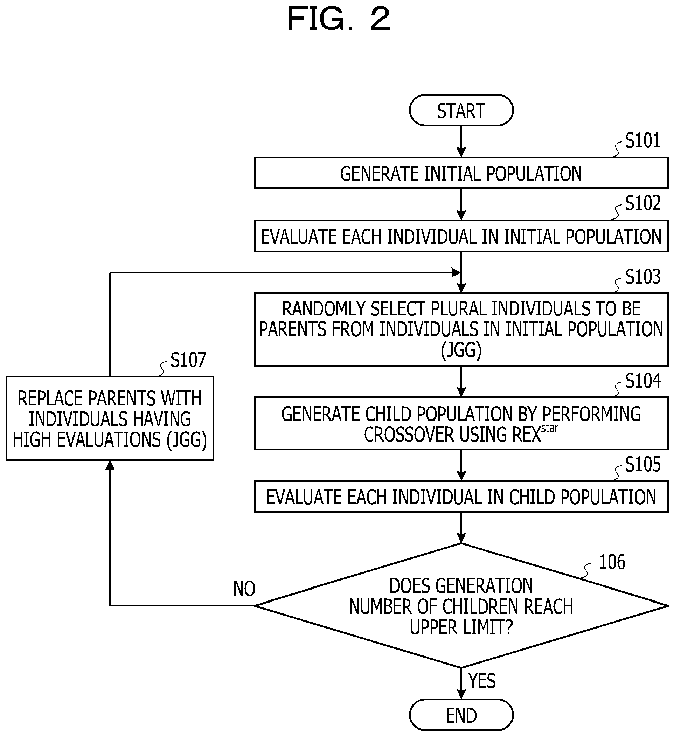

With reference to FIG. 2, description will be given of an example of a sequence of the real-coded GA using REX$^{star}$ and JGG.

First, in the example of the real-coded GA, an initial population is generated (S101). The initial population may be generated, for example, by generating a plurality of initial individuals in which continuous variables are randomly set.

Next, in the example of the real-coded GA, each individual in the initial population is evaluated (S102). The evaluation of each individual may be performed in a way such as, for example, a way of calculating the value of an objective function f(x) for a continuous variable x and setting the calculation result as an evaluation value, or a way of determining a value of an objective function by setting the continuous variable x set as a parameter and performing analysis using numerical calculation, and setting the analysis result as an evaluation value.

Subsequently, in the example of the real-coded GA, a plurality of individuals to be set as parents are randomly selected from the individuals of the initial population (S103). In the example of the real-coded GA, the parents are selected by using JGG at S103.

In the example of the real-coded GA, crossover using REX$^{star}$ is performed to generate a child population (S104).

Next, in the example of the real-coded GA, each individual in the child population is evaluated (S105). The evaluation for each individual in the child population may be performed in the same method as in S102.

Subsequently, in the example of the real-coded GA, whether or not the generation number of the children reaches an upper limit (predetermined number) is determined (S106). The processing is advanced to S107 when it is determined that the generation number of the children is yet to reach the upper limit or is ended when it is determined that the generation number of the children reaches the upper limit.

In the example of the real-coded GA, when it is determined that the generation number of the children is yet to reach the upper limit, the parents are replaced with the individuals having high evaluations (S107). In the example of the real-coded GA, JGG is used at S107 to replace the parents with the individuals having high evaluations.

In the example of the real-coded GA, after the processing at S107 is completed, the processing is returned to S103 and calculation for the next generation is performed.

In this manner, in the example of the real-coded GA using REX$^{star}$ and JGG, the optimization problem for the continuous variables is optimized.

On the other hand, as the method of optimizing discrete variables, there is the technique using the "annealing method (annealing)" as described above. For example, as a technique capable of solving a combinatorial optimization problem for optimizing a combination of discrete values at high speed, a technique of performing calculation based on the annealing method using an annealing machine or the like has been proposed.

As a method of searching for a solution to a combinatorial optimization problem by the annealing method, for example, a method using an objective function expression based on conditions and constraints in a combinatorial optimization problem has been proposed. The objective function expression is a function that takes a minimum value when the parameters (variables) in the objective function expression become an optimal combination in the combinatorial optimization problem. Therefore, it is possible to search for a solution to the combinatorial optimization problem by searching for a combination of discrete variables that give the minimum value to the objective function expression (by minimizing the objective function expression).

In order to minimize an objective function expression efficiently at high speed by the annealing method (annealing) using an annealing machine or the like, the objective function expression has to be expressed in a quadratic unconstrained binary optimization (QUBO) form in some cases. The QUBO form means a form in which an objective function expression to be maximized or minimized for variables that may each take only two values such as 0 and 1 may be expressed in quadratic terms without an explicit constraint on a range in the variable space.

In order to express the objective function expression in the QUBO form, each variable (parameter) included in the objective function expression to be optimized is requested to be a discrete value (for example, a binary variable that may take only two values such as 0 and 1).

Therefore, as described above, in order to enable efficient optimization using the annealing method (annealing) to be applied to an optimization problem including continuous variables, each of the continuous variables is divided (discretized) by a predetermined step to be expressed as discrete values, and then are optimized in some cases. In the case where the continuous value is discretized and expressed as discrete values, the step for dividing the continuous value has to be small enough to maintain the calculation accuracy. When each of the continuous variables is divided (discretized) by a predetermined step and is expressed as discrete values, many discrete variables (bits used for calculation) have to be used, which may in turn result in enormous calculation cost and difficulty of the calculation. For example, in an attempt to use an annealing machine capable of performing high-speed calculation based on the annealing method to search for a solution to a combinatorial optimization problem, it is difficult to apply the annealing machine to a combinatorial optimization problem including continuous values due to a limitation on the number of bits usable in the annealing machine.

Therefore, in the related art, even a problem that is intrinsically a combinatorial optimization problem including both of continuous variables and discrete variables is optimized by optimizing only the discrete variables while the continuous variables are fixed. For example, for optimization of a vibration-powered generator device, there has been proposed a technique of optimizing magnet arrangement (orientations of small magnets) while fixing design parameters which are continuous variables such as the positions of coils and the dimensions of the device. This technique is disclosed in "A. Maruo, H. Igarashi, H. Oshima, and S. Shimokawa, "Optimization of Planar Magnet Array Using Digital Annealer", in IEEE Transactions on Magnetics, vol. 56, no.3, pp. 1-4, March 2020, Art no. 7512104, doi:10.1109/TMAG.2019.2957805.".

As described above, in the related art, it is difficult to apply the annealing method using the annealing machine to optimization of an optimization problem including both of continuous variables and discrete variables, because the number of bits requested for the calculation is enormous due to the discretization of the continuous values by division.

For example, the related art entails enormous calculation cost for optimizing an optimization problem including both of continuous variables and discrete variables, and therefore fails to efficiently optimize such an optimization problem in some cases.

Therefore, the inventors have made extensive studies on an apparatus and the like capable of efficiently optimizing an optimization problem including both of continuous variables and discrete variables while saving calculation cost requested for the optimization, and have obtained the following findings.

For example, the inventors have found that the following optimization apparatus and the like are capable of efficiently optimizing an optimization problem including both of continuous variables and discrete variables while saving the calculation cost requested for the optimization.

An optimization apparatus as an example of the technique disclosed herein is an optimization apparatus that optimizes an optimization problem represented by using an objective function expression including a continuous variable composed of continuous value data and a discrete variable composed of discrete value data.

The optimization apparatus includes an optimization processing unit that optimizes the objective function expression.

The optimization processing unit

obtains, as the continuous variable, an n-th generation data value group (n ≥ 1) including a plurality of data values selected from the continuous value data;

determines an evaluation value of each of the plurality of data values in the n-th generation data value group by performing optimization processing of the objective function expression by an annealing method using the n-th generation data value group;

obtains an (n+1)-th generation data value group based on the evaluation values by using a genetic algorithm, the (n+1)-th generation data value group being different from the n-th generation data value group and including a plurality of data values selected from the continuous value data, and

replaces the n-th generation data value group with the (n+1)-th generation data value group as the continuous variable.

In the example of the technique disclosed herein, an optimization problem represented by using an objective function expression including continuous variables composed of continuous value data and discrete variables composed of discrete value data is optimized. For example, in the example of the technique disclosed herein, an objective function expression including both of continuous variables which are continuous values and discrete variables which are discrete values is optimized.

In the example of the technique disclosed herein, an n-th generation data value group (n ≥ 1) including a plurality of data values selected from continuous value data is obtained as the continuous variables. For example, in the example of the technique disclosed herein, the n-th generation data value group including the plurality of data values of the continuous variables (an n-th generation data structure as a parent population) is obtained.

Next, in the example of the technique disclosed herein, the evaluation value of each of the plurality of data values in the n-th generation data value group is determined by performing optimization processing of the objective function expression by the annealing method using the n-th generation data value group. For example, in the example of the technique disclosed herein, the annealing method is used to determine the evaluation value of each of the individual data values in the n-th generation data value group (parent population).

Subsequently, in the example of the technique disclosed herein, an (n+1)-th generation data value group being different from the n-th generation data value group and including a plurality of data values selected from the continuous value data is obtained based on the evaluation values by using the genetic algorithm. For example, in the example of the technique disclosed herein, the (n+1)-th generation data value group being different from the n-th generation data value group and including the plurality of data values selected from the continuous value data is obtained by using the genetic algorithm based on a data value group with the high evaluation results derived from the evaluation values in the n-th generation data value group. In the example of the technique disclosed herein, the (n+1)-th generation data value group (child population) in the generation next to the n-th generation is obtained based on the population with the high evaluation results by using the genetic algorithm as described above.

In the example of the technique disclosed herein, the n-th generation data value group is replaced with the (n+1)-th generation data value group as the continuous variables. For example, in the example of the technique disclosed herein, a population of individuals having high evaluation results in the parent population is first determined as a child population (set as a parent population for the next generation), and then the objective function expression is optimized.

As described above, in the example of the technique disclosed herein, for example, the continuous variables are optimized by the genetic algorithm (GA), and the evaluation of the data value group (population) in the GA and the optimization of the discrete variables are performed by the annealing method. For example, in the example of the technique disclosed herein, the optimization problem is divided into optimization of the continuous variables and optimization of the discrete variables, the continuous variables are optimized by the GA without discretization and the discrete variables are optimized by the annealing method using the values of the optimized continuous variables.

In the example of the technique disclosed herein, the GA that performs continuous value optimization is set as a main flow, and a combinatorial optimization of the discrete values by the annealing method as a sub-flow is performed by using the values of the continuous values included in the individuals in the GA to evaluate the individuals in the GA. In the example of the technique disclosed herein, the value of the objective function expression determined by the combinatorial optimization is returned to the main flow as the evaluation value, and thereby individuals having high evaluation results are extracted from the population (the n-th generation data value group) in the GA and are set as a population for the next generation ((n+1)-th generation data value group).

In the example of the technique disclosed herein, it is preferable to iterate the above operation of generating the n-th generation data value group and replacing the n-th generation data value group with the (n+1)-th generation data value group (generating the (n+1)-th generation data value group). For example, in the example of the technique disclosed herein, it is preferable to iterate processing of determining the evaluation value of each of the data values in the (n+1)-th generation data value group, extracting a data value group (population) in descending order of the evaluation result from the (n+1)-th generation data value group, and setting the extracted data value group as an (n+2)-th generation data value group.

In this way, the data value group (population) finally obtained is a data value group having a higher evaluation result, so that it is possible to optimize the optimization problem more appropriately by optimizing the objective function expression using this data value group.

As described above, in the example of the technique disclosed herein, it is possible to efficiently optimize the continuous variables by the above-described real-coded GA or the like without discretizing the continuous variables unlike a technique, for example, in which each of the continuous variables is divided by a predetermined step to be expressed as discrete values and is then optimized. In the example of the technique disclosed herein, for example, it is possible to efficiently evaluate individuals (each being a function that is defined by predetermined continuous value data and includes discrete variables) in the above-described real-coded GA by the annealing method, and to efficiently perform generation alternation in the real-coded GA.

Therefore, in the example of the technique disclosed herein, it is capable of efficiently optimizing both of the continuous variables and the discrete variables without having to divide and discretize the continuous variables, and therefore is capable of efficiently optimizing an optimization problem including these variables while saving the calculation cost requested for the optimization.

Hereinafter, an example of the technique disclosed herein will be described with reference to the drawings. Processing (operation) such as optimization of an objective function expression in an optimization apparatus as the example of the technique disclosed herein may be performed by, for example, an optimization processing unit included in the optimization apparatus.

The optimization apparatus disclosed herein includes the optimization processing unit, and may further include other units (means) as requested. The optimization processing unit may be implemented, for example, as a combination of a processor such as a central processing unit (CPU) and a memory such as a random-access memory (RAM) or as a part of an annealing machine.

The optimization apparatus disclosed herein is an apparatus that optimizes an optimization problem represented by using an objective function expression including continuous variables composed of continuous value data and discrete variables composed of discrete value data.

An optimization problem to be optimized by using the example of the technique disclosed herein is not particularly limited as long as the optimization problem is represented by an objective function expression including continuous variables and discrete variables, and may be appropriately selected according to the intended purpose. Examples of an optimization problem represented by an objective function expression including continuous variables and discrete variables include an optimization problem concerning a composition of a mixture, an optimization problem concerning a search for a stable structure of candidate substances for a drug, an optimization problem concerning a shape of a device, and so on. A specific example of the optimization problem concerning the shape of the device is a problem of optimizing the shapes, positions, arrangement, and the like of magnets and coils in a magnetic device such as a vibration-powered generator device.

In the objective function expression, parameters set as continuous variables and parameters set as discrete variables may be appropriately selected according to conditions and so forth of the optimization problem. In the example of the technique disclosed herein, for example, a parameter that requests many variables (bits used for calculation) when the parameter is set as discrete variables is preferably set as a continuous variable.

The continuous variables composed of continuous value data may be, for example, variables composed of a plurality of pieces of continuous value data (each piece of data that may take a continuous value). Similarly, the discrete variables composed of the discrete value data may be, for example, variables composed of a plurality of pieces of discrete value data (each piece of data that may take a discrete value).

<Obtaining of n-th Generation Data Value Group>

In the example of the technique disclosed herein, an n-th generation data value group (n ≥ 1) including a plurality of data values selected from the continuous value data is obtained as the continuous variables as described above.

The n-th generation data value group means a group (collection) of data pieces having values of continuous variables different from each other (data pieces on different continuous values), and may be treated as a "population (generation)" in the genetic algorithm.

Regarding the n-th generation data value group (n-th generation data structure), a first generation for performing processing on an objective function expression (a first generation data value group where n is 1; an initial population) may be obtained, for example, by randomly selecting a plurality of data pieces from continuous value data by using random numbers.

The number of data values selected as the first generation data value group (the number of initial individuals generated) is not particularly limited and may be appropriately selected according to the intended purpose, but is preferably determined based on the number of continuous variables included in the objective function expression, for example. In the example of the technique disclosed herein, for example, a proportional relationship between the number (of types) of continuous variables included in an objective function expression and the number of data values selected as the first generation data value group is preferably such that the larger the number of continuous variables, the larger the number of data values selected.

In the example of the technique disclosed herein, in iterations of replacing the n-th generation data value group with the (n+1)-th generation data value group (n is 2 or more), the (n+1)-th generation data value group (child population) newly set by the replacement is treated as the n-th generation data value group including parents for the next generation.

In this way, a data value group having higher evaluation results is used as the number of iterations of the processing increases. Thus, it is possible to more appropriately perform optimization of the optimization problem by optimizing the objective function expression using this data value group.

<Determination of Evaluation Value>

In the example of the technique disclosed herein, the evaluation value of each of the plurality of data values in the n-th generation data value group is determined by performing the optimization processing of the objective function expression by the annealing method using the n-th generation data value group as described above.

The optimization of an objective function expression by the annealing method (annealing) involves, for example, optimizing each of the data values (each of the individuals) in the n-th generation data value group by the annealing method. For example, in the example of the technique disclosed herein, the evaluation value is determined by performing combinatorial optimization of the discrete variables by the annealing method for the objective function expression in which the continuous variables are set to predetermined data values.

The evaluation value is not particularly limited as long as it is a value capable of evaluating each of the data values in the n-th generation data value group, and may be appropriately selected according to the intended purpose. For example, the evaluation value may be a function value (energy value) that the objective function expression in which the continuous variables are set to the predetermined data values takes when performing optimization processing by the annealing method.

For example, in the example of the technique disclosed herein, for an objective function expression in which continuous variables are set to predetermined data values, a combinatorial optimization of discrete variables by the annealing method is performed to obtain a minimum value or a maximum value of the objective function, so that the evaluation value may be determined.

Details of specific examples of a mathematical expression and a calculation method used for a combinatorial optimization of discrete variables by the annealing method for an objective function expression in which continuous variables are set to predetermined data values will be described later.

In the example of the technique disclosed herein, for evaluation of each of a plurality of data values (individuals) in the n-th generation data value group, it is preferable to control the number of annealing iterations for performing the evaluation according to the generation number of the data value group (population) to be evaluated. For example, in the example of the technique disclosed herein, it is preferable that the optimization processing unit control the number of executions of the optimization processing according to the generation number of the n-th generation data value group when determining the evaluation value of each of the plurality of data values in the n-th generation data value group.

When the optimization processing of the objective function expression is performed by the annealing method, the degree of optimization of the objective function expression depends on the number of annealing iterations (the number of executions of the optimization processing). For example, when the number of annealing iterations is small, the calculation for optimizing an objective function expression may be performed in a short time, but the accuracy of the optimization may be insufficient because the calculation may be ended in the middle of the optimization. On the other hand, when the number of annealing iterations is large (sufficient), the optimization of the objective function expression may be performed with sufficient accuracy although the calculation time is long.

Therefore, in the example of the technique disclosed herein, it is preferable to set the number of iterations to a small number when the generation number of the data value group to be evaluated is equal to or less than a predetermined number. In the example of the technique disclosed herein, it is preferable that the optimization processing unit reduce the number of executions of the optimization processing when the generation number of the n-th generation data value group is equal to or less than the predetermined number. For example, in the example of the technique disclosed herein, a rough evaluation value is determined by a short-time simple optimization (evaluation) when the generation number is equal to or less than the predetermined number, and a more accurate evaluation value is determined by a more accurate optimization (evaluation) with a sufficiently large number of iterations when the generation number is more than the predetermined number.

In this way, in the example of the technique disclosed herein, it is possible to switch between a short-time simple evaluation (optimization) and an intensive evaluation with high accuracy depending on desired calculation accuracy, and it is possible to perform optimization in a short time while further saving the calculation cost.

In the example of the technique disclosed herein, when the number of annealing iterations (the number of executions of the optimization processing) is controlled depending on the generation number of the n-th generation data value group, the generation numbers may be divided into three or more classes, and the number of annealing iterations for evaluation may be set to one of three or more levels. In the example of the technique disclosed herein, when the number of annealing iterations is controlled depending on the generation number of the n-th generation data value group, the number of iterations may be gradually changed such that the generation number and the number of iterations have a proportional relationship.

When the short-time simple evaluation (optimization) and the intensive evaluation are switched and used for the evaluation of the n-th generation data value group, the number of annealing iterations in each optimization (the number of executions of the optimization processing) is not particularly limited, and may be appropriately set according to the intended purpose. When the short-time simple evaluation (optimization) and the intensive evaluation are switched and used, the number of annealing iterations in each of the evaluations is preferably determined in such a way that, for example, a plurality of data values (individuals) in which continuous variables are randomly set are optimized by the annealing method.

For example, in order to determine the number of annealing iterations, for example, a plurality of objective function expressions in which continuous variables are randomly set (individuals having random data values) are prepared. For example, the number of iterations is determined with which the energy values of all the objective function expressions have no change (the energy values are fixed as a result of sufficient optimizations) in the optimizations of these objective function expressions. Then, the determined number of iterations is set as the number of iterations for the intensive evaluation (optimization) sufficient to reach an optimal solution. In the example of the technique disclosed herein, for example, the number of iterations with a calculation time sufficiently shorter than the calculation time of the number of iterations for the intensive evaluation sufficient to reach an optimal solution is set as the number of iterations for the short-time simple evaluation.

The number of objective function expressions in which the continuous variables are randomly set (individuals having random data values) is not particularly limited and may be appropriately selected according to the intended purpose. For example, it is preferable to prepare about five objective function expressions.

Whether or not the energy values in all the prepared objective function expressions become unchanged (the energy values are fixed as a result of sufficient optimizations) may be determined as appropriate. For example, the determination may be made according to a change rate of the energy value with respect to the number of iterations.

The number of iterations with a calculation time sufficiently shorter than the calculation time of the number of iterations for the intensive evaluation sufficient to reach an optimal solution may be appropriately selected depending on how much the calculation time is desired to reduce in consideration of the relationship between the number of iterations and the calculation time.

<Obtaining of (n+1)-th Generation Data Value Group>

In the example of the technique disclosed herein, an (n+1)-th generation data value group being different from the n-th generation data value group and including a plurality of data values selected from the continuous value data is obtained based on the evaluation values by using the genetic algorithm. In the example of the technique disclosed herein, for example, the (n+1)-th generation data value group being different from the n-th generation data value group and including a plurality of data values selected from the continuous value data is obtained by using the genetic algorithm from based on a data value group having high evaluation results derived from the evaluation value in the n-th generation data value group.

A method of obtaining the (n+1)-th generation data value group based on the evaluation value is not particularly limited and may be appropriately selected according to the intended purpose. For example, the evaluation results derived from the evaluation value (obtained from the evaluation value) in the n-th generation data value group may be used. For example, the evaluation results based on the function value (energy value) that the objective function expression takes when optimized by the annealing method may be used.

For example, in a case where the minimum value of the objective function expression is obtained by the annealing method and is set as the evaluation value, the data values (individual) in the objective function expression with the smallest minimum value may be determined as data values (individual) with the highest evaluation results. In this case, for example, when the minimum value of the objective function expression is a negative value, a data value group achieving a negative value, the absolute value of which is the largest (largest minus value), may be regarded as a data value group achieving the highest evaluation results.

In the example of the technique disclosed herein, the (n+1)-th generation data value group (child population) is obtained by using the genetic algorithm based on a data value group with the highest evaluation results in the n-th generation data value group (a population of individuals with the highest evaluation results in the parent population). For example, in the example of the technique disclosed herein, the data value group for the next generation (the (n+1)-th generation data value group) is generated and obtained in such a way the data value group having the highest evaluation results in the n-th generation data value group is processed by operations such as crossover and generation alternation by using the genetic algorithm.

The genetic algorithm used to obtain the (n+1)-th generation data value group is not particularly limited as long as it is capable of obtaining a data value group being different from the n-th generation data value group and including a plurality of data values selected from the continuous value data, and may be appropriately selected according to the intended purpose. As the genetic algorithm, it is preferable to use a real-coded genetic algorithm (real-coded GA) in which the above-described "REX$^{star}$" is used as the crossover method and the above-described "JGG" is used as the generation alternation method.

In the example of the technique disclosed herein, for REX$^{star}$ and JGG, it is possible to appropriately use the techniques disclosed, for example, in the literatures such as "Shigenobu Kobayashi, "The Frontiers of Real-coded Genetic Algorithms", [Journal] Artificial Intelligence, Vol. 24, No. 1, pp. 147-162, 2009", and "Takahiro Sato, "A Study on Design Optimization of Electric Devices and Machines Based on Electromagnetic Field Analysis (Japanese)", Doctor's Thesis in Annual Year 2014, Division of Systems and Information Engineering, Graduate School of Information Science and Technology, Hokkaido University, 2015".

The parameters of the genetic algorithm for replacing the n-th generation data value group with the (n+1)-th generation data value group may be appropriately set, but are preferably set to appropriate values obtained by using, for example, the above-described short-time simple optimization. Examples of the parameters of the genetic algorithm include a step size, the generation number for switching the number of annealing iterations, the upper limit generation number (genetic algorithm iteration count), and the like. As described above, the step size (t) means a magnitude of movement in the global descending direction in REX$^{star}$.

For setting the parameters of the genetic algorithm to the appropriate values obtained by using the short-time simple optimization, for example, first, the short-time simple optimization is performed on a plurality of objective function expressions different in the value of step size t. It is preferable that the step size t that gives the lowest energy value as a result of the optimizations be applied to an actual optimization (the genetic algorithm for use to obtain the (n+1)-th generation data value group).

As the plurality of objective function expressions different in the value of the step size t, for example, about five objective function expressions are preferably prepared by appropriately changing the step size t within a range which the step size t may usually take.

The generation number (S) for switching the number of annealing iterations may be set to, for example, a generation number having no change in the energy value in the optimization with the step size t that gives the lowest energy value to the objective function expression among the aforementioned optimizations for obtaining the step size t.

The upper limit generation number (genetic algorithm iteration count; G) may be determined based on, for example, the generation number S for switching the number of annealing iterations. For example, the upper limit generation number G may be set to about "G = S + (S/3) = (4/3)S" based on the generation number S for switching the number of annealing iterations.

In the example of the technique disclosed herein, the objective function expression is optimized by replacing the n-th generation data value group with the (n+1)-th generation data value group as the continuous variables as described above. Since the (n+1)-th generation data value group (the child population; the parent population for the next generation) is based on the data value group with the highest evaluation results, an optimization of the optimization problem may be more appropriately performed by optimizing the objective function expression using the (n+1)-th generation data value group.

As described above, in the example of the technique disclosed herein, it is preferable to iterate the generation of the n-th generation data value group and the replacement of the n-th generation data value group with the (n+1)-th generation data value group (generation of the (n+1)-th generation data value group). In this way, the data value group (population) finally obtained is a data value group with even higher evaluation results, so that it is possible to optimize the optimization problem more appropriately by optimizing the objective function expression using this data value group.

In the example of the technique disclosed herein, it is preferable to perform a final optimization of the objective function expression by using data values (individual) with the highest evaluation result in the (n+1)-th generation data value group (for example, a final data value group after a predetermined number of iterations is completed).

This final optimization of the objective function expression may be performed by, for example, the annealing method (annealing).

<<Specific Example of Objective Function Expression>>

In the example of the technique disclosed herein, the objective function expression is not particularly limited as long as it includes continuous variables and discrete variables as described above, and may be appropriately selected according to the intended purpose. For example, an objective function expression represented by the following expression (1) may be preferably used. In the example of the technique disclosed herein, for example, it is preferable that the optimization processing unit perform optimization processing represented by the following expression (1).

$$E(\boldsymbol{s}, \boldsymbol{x}) = -\sum_{i,j=0} w(\boldsymbol{x})_{ij} s_i s_j - \sum_{i=0} b(\boldsymbol{x})_i s_i + c(\boldsymbol{x})$$

Expression (1)

In Expression (1),

E(s, x) is an objective function expression,
$w(x)_{ij}$ is a coefficient for weighting between an i-th bit and a j-th bit, a magnitude of which is determined depending on a value of x that represents a continuous variable,
si is a binary variable indicating that the i-th bit is 0 or 1,
$s_j$ is a binary variable indicating that the j-th bit is 0 or 1,
$b(x)_i$ is a numerical value representing a bias for the i-th bit, the magnitude of which is determined depending on the value of x that represents the continuous variable, and
c(x) is a constant, a magnitude of which is determined depending on the value of x that represents the continuous variable.

The above expression (1) is an objective function expression in the QUBO form including the continuous variable x and binary variables s which are an example of discrete variables. In the example of the technique disclosed herein, as described above, for example, the optimization of the continuous variable x in the above expression (1) is performed by the genetic algorithm, and the evaluation of the objective function expression (determination of the evaluation value) and the optimization of the discrete variables s are performed by the annealing method.

In this way, in the example of the technique disclosed herein, it is possible to efficiently optimize both of the continuous variable x and the discrete variables s, and thus it is possible to efficiently optimize the optimization problem including these variables while saving the calculation cost requested for the optimization.

In the annealing method, for example, the objective function expression in the QUBO form is converted into a form called an Ising model, and the combinatorial optimization problem is solved by minimizing the value of the objective function converted into the Ising model.

An expression in an Ising model (Ising model expression) converted from the objective function in the QUBO form may be, for example, an Ising model expression in the QUBO form represented by the following expression. For example, in the example of the technique disclosed herein, it is preferable that the optimization processing unit perform the optimization processing based on the Ising model expression converted from the objective function expression and represented by the following expression (2).

$$E(s) = -\sum_{i,j=0} w_{ij} s_i s_j - \sum_{i=0} b_i s_i + const.$$

Expression (2)

In Expression (2),

E(s) is an objective function expression converted into an Ising model expression,
$w_{ij}$ is a coefficient for weighting between an i-th bit and a j-th bit,
$b_i$ is a numerical value representing a bias for the i-th bit,
$s_i$ is a binary variable indicating that the i-th bit is 0 or 1,
$s_j$ is a binary variable indicating that the j-th bit is 0 or 1, and
const. is a constant.

In the annealing method, for example, it is possible to efficiently search for the minimum value of the Ising model expression in a short time while variously changing each bit (element) in the Ising model expression in the QUBO form.

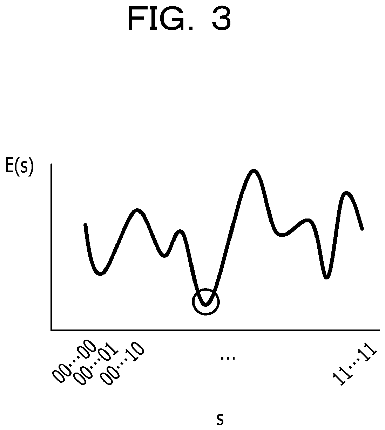

For example, as illustrated in FIG. 3, by searching for a combination of bits (s; 0 or 1) that gives the minimum value to the Ising model expression in the QUBO form (searching for a portion surrounded by a circle), it is possible to determine the states of the bits that may optimize the Ising model expression. In FIG. 3, the vertical axis represents the magnitude of the energy value calculated with the Ising model expression (E), and the horizontal axis represents a combination of bits (s).

In the annealing method, it is possible to obtain the parameters that optimize the objective function expression based on the determined states of the bits and therefore to efficiently optimize the objective function expression in a short time.

Here, $w_{ij}$ in the above expression (2) may be obtained, for example, by extracting, for each combination of $x_i$ and $x_j$, the numerical values or the like of the respective parameters in the objective function expression before conversion to the Ising model expression, and is usually a matrix.

The first term on the right side of the above expression (2) is the sum of the products in all the combinations, without omission and duplication, of two states selectable from the states of all the bits, the products each obtained by multiplication of the states and the weight value (weight) of the two circuits.

The second term on the right side of the above expression (2) is the sum of the products in which the states of all the bits are multiplied by the bias values for the states, respectively.

For example, it is possible to obtain $w_{ij}$ and bi by extracting the parameters in the objective function expression before the conversion to the Ising model expression and thereby convert the objective function expression into the Ising model expression represented by the above expression (2).

Then, "const." in the above expression (2) may be set as appropriate, for example, based on the numerical value of each parameter in the objective function expression before the conversion to the Ising model expression.

Examples of the processing of converting the objective function expression of the above expression (1) into the Ising model expression of the above expression (2) include a method of expanding and converting the objective function expression by using "for loop" in a self-made program, a conversion method using a program capable of directly processing a mathematical expression, and the like.

In the example of the technique disclosed herein, the Ising model expression converted from the objective function expression as described above may be optimized (minimized) in a short time by, for example, performing an annealing method (annealing) using an annealing machine or the like. For example, in the example of the technique disclosed herein, it is preferable that the optimization processing unit perform the optimization processing by minimizing the Ising model expression converted from the objective function expression by the annealing method.

Examples of the annealing machine used to optimize the objective function expression include, for example, a quantum annealing machine, a semiconductor annealing machine using semiconductor technology, a machine that performs simulated annealing executed by software using a central processing unit (CPU) and a graphics processing unit (GPU), and so on. As the annealing machine, for example, Digital Annealer (registered trademark) may be used.

Details of the annealing method using the annealing machine will be described later.

In the example of the technique disclosed herein, for example, the evaluation value may be determined by performing the aforementioned objective function expression optimization by the annealing method (the optimization processing) on the objective function expression in which the continuous variables are set to predetermined data values (the continuous variables are determined). For example, under the condition that the number of annealing iterations is set to a predetermined number, the combinatorial optimization of the discrete variables by the annealing method may be performed to obtain the minimum value of the objective function expression, and the obtained minimum value may be determined as the evaluation value.

Hereinafter, the example of the technique disclosed herein will be described in more detail by using configuration examples of apparatuses, flowcharts, and so on.

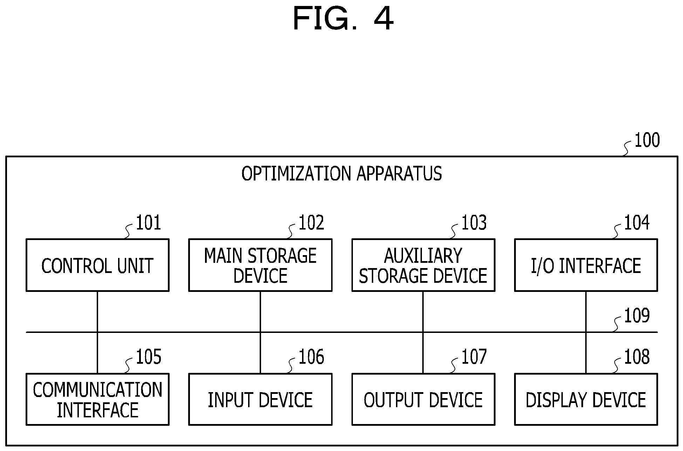

FIG. 4 illustrates a hardware configuration example of an optimization apparatus disclosed herein.

In an optimization apparatus 100, for example, a control unit 101, a main storage device 102, an auxiliary storage device 103, an input/output (I/O) interface 104, a communication interface 105, an input device 106, an output device 107, and a display device 108 are coupled to each other via a system bus 109.

The control unit 101 performs operations (such as four arithmetic operations, comparison operations, and annealing method operations), operation control of hardware and software, and the like. The control unit 101 may be, for example, a central processing unit (CPU), a part of an annealing machine for use in the annealing method, or a combination of them.

The control unit 101 implements various functions by, for example, executing a program (such as, for example, the optimization program disclosed herein) read into the main storage device 102 or the like.

The processing performed by the optimization processing unit in the optimization apparatus disclosed herein may be performed by the control unit 101, for example.

The main storage device 102 stores various programs and stores data and others to be used for executing the various programs. As the main storage device 102, for example, a storage device including at least one of a read-only memory (ROM) and a random-access memory (RAM) may be used.

The ROM stores, for example, various programs such as a Basic Input/Output System (BIOS). The ROM is not particularly limited, and may be selected according to the intended purpose as appropriate, and examples thereof include a mask ROM, a programmable ROM (PROM), and the like.

The RAM functions as, for example, a work area in which the various programs stored in the ROM, the auxiliary storage device 103, and the like are expanded when executed by the control unit 101. The RAM is not particularly limited, and may be selected according to the intended purpose as appropriate, and examples thereof include a dynamic random-access memory (DRAM), a static random-access memory (SRAM), and the like.

The auxiliary storage device 103 is not particularly limited as long as it is capable of storing various kinds of information, and may be selected according to the intended purpose as appropriate. Examples thereof include a solid-state drive (SSD), a hard disk drive (HDD), and the like. The auxiliary storage device 103 may be a portable storage device such as a compact disc (CD) drive, a Digital Versatile Disc (DVD) drive, or a Blu-ray (Registered trademark) disc (BD) drive.

The optimization program disclosed herein is stored in the auxiliary storage device 103, is loaded onto the RAM (main memory) of the main storage device 102, and is executed by the control unit 101, for example.

The I/O interface 104 is an interface for coupling to various external devices. The I/O interface 104 allows input and output of data from and to, for example, a compact disc read-only memory (CD-ROM), a Digital Versatile Disk read-only memory (DVD-ROM), a magneto-optical (MO) disk, a Universal Serial Bus (USB) memory (USB flash drive), or the like.

The communication interface 105 is not particularly limited, and any known interface may be used as appropriate. An example thereof is a wireless or wired communication device or the like.

The input device 106 is not particularly limited as long as it is capable of receiving input of various kinds of requests and information addressed to the optimization apparatus 100, and any known device may be used as appropriate. Examples thereof include a keyboard, a mouse, a touch panel, a microphone, and so on. When the input device 106 is a touch panel (touch display), the input device 106 may also serve as the display device 108.

The output device 107 is not particularly limited, and any known device may be used as appropriate. An example thereof is a printer or the like.

The display device 108 is not particularly limited, and any known display device may be used as appropriate. Examples thereof include a liquid crystal display, an organic EL display, and the like.

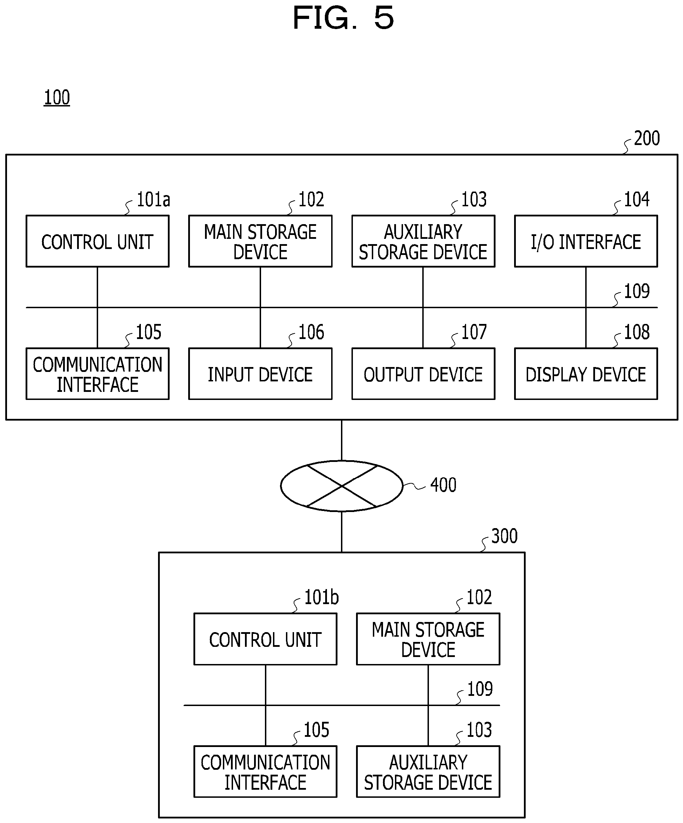

FIG. 5 illustrates another hardware configuration example of the optimization apparatus disclosed herein.

In the example illustrated in FIG. 5, the optimization apparatus 100 is divided into a computer 200 that performs processing of defining an objective function expression, processing using the genetic algorithm, and processing of converting the objective function expression into an Ising model expression, and an annealing machine 300 that optimizes the Ising model expression. In the example illustrated in FIG. 5, the computer 200 and the annealing machine 300 in the optimization apparatus 100 are coupled to each other via a network 400.

In the example illustrated in FIG. 5, for example, a CPU or the like may be used as a control unit 101a in the computer 200, and a device specialized for the annealing method (annealing) may be used as a control unit 101b in the annealing machine 300.

In the example illustrated in FIG. 5, for example, the computer 200 defines an objective function expression by making various settings for objective function expression definition, performs processing using the genetic algorithm to obtain an (n+1)-th generation data value group, and then converts the defined objective function expression into the Ising model expression. The computer 200 transmits information on the values of the weight ($w_{ij}$) and the bias ($b_i$) in the Ising model expression to the annealing machine 300 via the network 400.

The annealing machine 300 optimizes (minimizes) the Ising model expression based on the received information on the values of the weight ($w_{ij}$) and the bias ($b_i$), and obtains the minimum value of the Ising model expression and the states of the bits that give the minimum value. The annealing machine 300 transmits the obtained minimum value of the Ising model expression and the obtained states of the bits that give the minimum value to the computer 200 via the network 400.

Subsequently, for example, the computer 200 obtains the shape and others of the device according to the optimization problem based on the processing of setting the minimum value of the Ising model expression as the evaluation value and the states of the bits that give the minimum value to the Ising model expression.

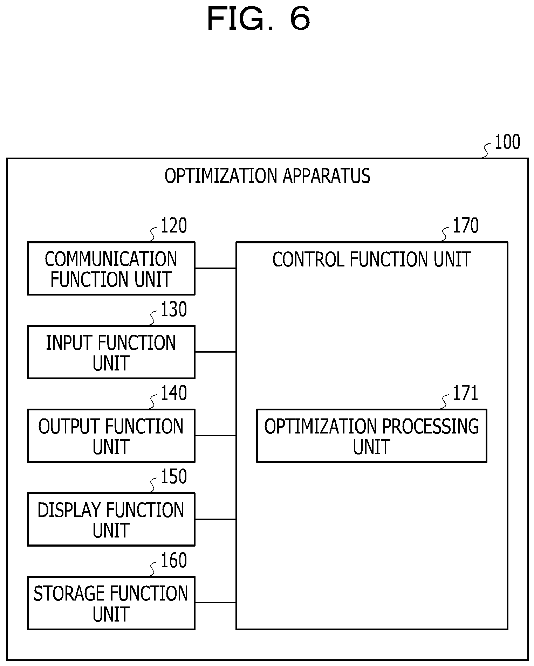

FIG. 6 illustrates a functional configuration example of the optimization apparatus disclosed herein.

As illustrated in FIG. 6, the optimization apparatus 100 includes a communication function unit 120, an input function unit 130, an output function unit 140, a display function unit 150, a storage function unit 160, and a control function unit 170.

The communication function unit 120 transmits and receives various kinds of data to and from an external device, for example. For example, the communication function unit 120 may receive data on the bias and the weight in the Ising model expression converted from the objective function expression from an external device.

The input function unit 130 receives, for example, various instructions to the optimization apparatus 100. For example, the input function unit 130 may receive input of the data on the bias and the weight in the Ising model expression converted from the objective function expression.

The output function unit 140 prints and outputs, for example, information on the optimization result of the optimization problem and the like.

The display function unit 150 displays, for example, information on the optimization result of the optimization problem and the like on a display.

The storage function unit 160 stores, for example, various programs, information on the optimization result of the optimization problem, and the like.

The control function unit 170 includes an optimization processing unit 171. The control function unit 170 executes, for example, the various programs stored in the storage function unit 160 and controls operations of the entire optimization apparatus 100.

The optimization processing unit 171 performs processing such as dividing an optimization problem into optimization of the continuous variables and optimization of the discrete variables, optimizing the continuous variables by the GA without discretizing the continuous variables, and optimizing the discrete variables by the annealing method using the values of the optimized continuous variables.

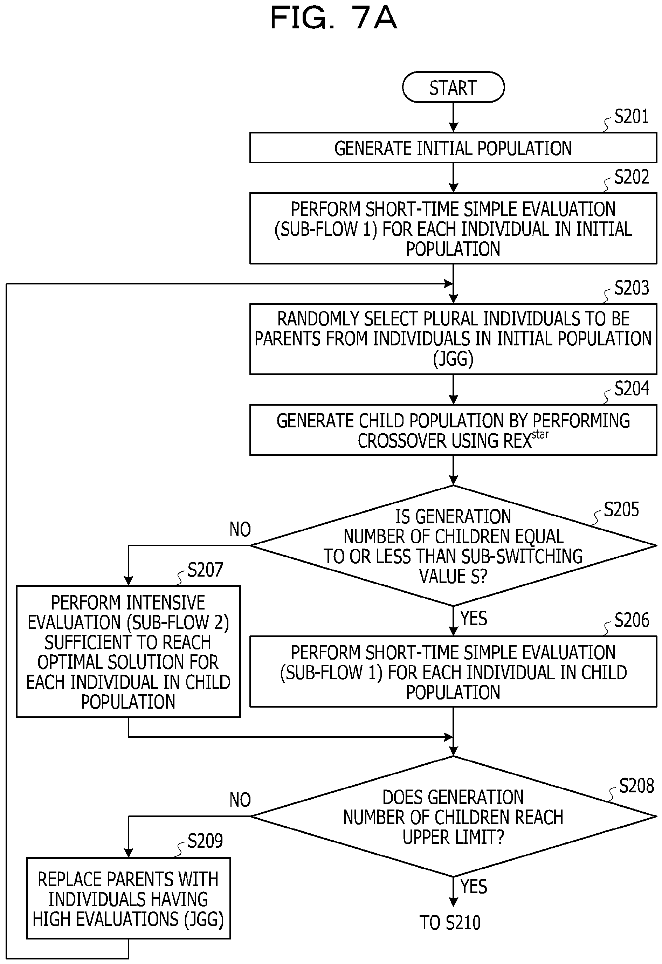

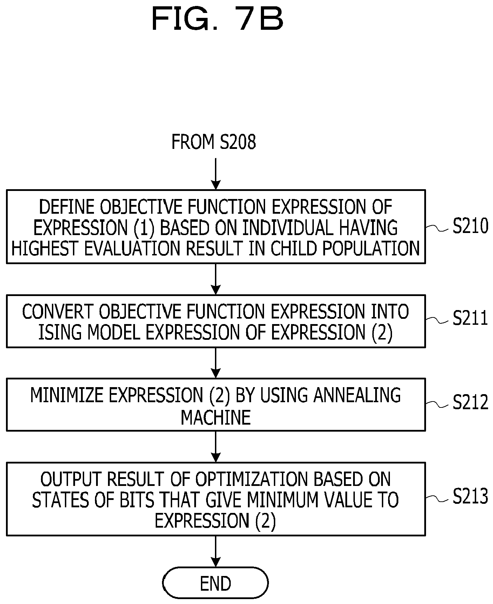

With reference to FIG. 7 (i.e., FIGs. 7A and 7B), description will be given of an example of a sequence in which an optimization problem represented by using an objective function expression including continuous variables composed of continuous value data and discrete variables composed of discrete value data is optimized by using the example of the technique disclosed herein. Hereinafter, the sequence of the processing illustrated in FIG. 7 may be referred to as a "main flow (main operation)".

As illustrated in FIG. 7, the optimization processing unit 171 generates an initial population (initial data value group) (S201). For example, at S201, the optimization processing unit 171 generates the initial population by randomly selecting a plurality of data pieces from the continuous value data on the continuous variables by using random numbers.

Next, the optimization processing unit 171 performs a short-time simple evaluation (sub-flow 1) for each individual in the initial population (S202). Details of the short-time simple evaluation (sub-flow 1) will be described later.

Subsequently, the optimization processing unit 171 randomly selects a plurality of individuals to be set as parents from the individuals in the initial population (S203). At S203, the parents are selected by using JGG.

The optimization processing unit 171 performs crossover using REX$^{star}$ to generate a child population (S204). For example, at S204, the optimization processing unit 171 creates a reflection point of each of the parents with respect to a position vector, identifies a global descent direction by obtaining the center of gravity of the individuals rated in the upper half from among the parents and the reflection points, and moves the distribution of the individuals by a step size t in the global descent direction.

Next, the optimization processing unit 171 determines whether or not the generation number of the children is equal to or less than a sub-switching value (the generation number for switching the number of iterations) S (S205). At S205, the optimization processing unit 171 advances the processing to S206 when determining that the generation number of the children is equal to or less than the sub-switching value S or advances the processing to S207 when determining that the generation number of the children is more than the sub-switching value S.

Subsequently, when determining that the generation number of the children is equal to or less than the sub-switching value S, the optimization processing unit 171 performs a short-time simple evaluation (sub-flow 1) for each individual in the child population (S206). On the other hand, when determining that the generation number of the children is more than the sub-switching value S, the optimization processing unit 171 performs an intensive evaluation (sub-flow 2) sufficient to reach an optimal solution for each individual in the child population (S207). Details of the intensive evaluation (sub-flow 2) sufficient to reach an optimal solution will be described later.

The optimization processing unit 171 determines whether or not the generation number of the children reaches an upper limit (predetermined number), and advances the processing to S209 when determining that the generation number of the children is yet to reach the upper limit, or advances the processing to S210 when determining that the generation number of the children reaches the upper limit (S208).

When determining that the generation number of the children is yet to reach the upper limit, the optimization processing unit 171 replaces the parents with the children having high evaluations (S209). At S209, the optimization processing unit 171 replaces the parents with the children having high evaluations by using JGG.

Next, after completing the processing at S209, the optimization processing unit 171 returns the processing to S203 and performs the calculation for the next generation.

When determining at S208 that the generation number of the children reaches the upper limit, the optimization processing unit 171 defines the following objective function expression (1) based on the individual having the highest evaluation result in the child population (S210).

$$E(s, x) = -\sum_{i,j=0} w(x)_{ij} s_i s_j - \sum_{i=0} b(x)_i s_i + c(x)$$

**Expression (1)**

In Expression (1),

E(s, x) is an objective function expression,
$w(x)_{ij}$ is a coefficient for weighting between an i-th bit and a j-th bit, a magnitude of which is determined depending on a value of x that represents a continuous variable,
si is a binary variable indicating that the i-th bit is 0 or 1,
$s_j$ is a binary variable indicating that the j-th bit is 0 or 1,
b(x)i is a numerical value representing a bias for the i-th bit, the magnitude of which is determined depending on the value of x that represents the continuous variable, and
c(x) is a constant, a magnitude of which is determined depending on the value of x that represents the continuous variable.

The optimization processing unit 171 converts the defined objective function expression into an Ising model expression represented by the following expression (2) (S211). For example, at S211, the optimization processing unit 171 obtains bi (bias) and $w_{ij}$ (weight) in the following expression (2) by extracting the parameters in the defined objective function expression, and thereby converts the objective function expression into the Ising model expression represented by the following expression (2).

$$E(s) = -\sum_{i,j=0} w_{ij} s_i s_j - \sum_{i=0} b_i s_i + const.$$

**Expression (2)**

In Expression (2),

E(s) is an objective function expression converted into an Ising model expression,
$w_{ij}$ is a coefficient for weighting between an i-th bit and a j-th bit,
$b_i$ is a numerical value representing a bias for the i-th bit,
si is a binary variable indicating that the i-th bit is 0 or 1,
$s_j$ is a binary variable indicating that the j-th bit is 0 or 1, and
const. is a constant.

Next, the optimization processing unit 171 minimizes the above expression (2) by using an annealing machine (S212). For example, at S212, the optimization processing unit 171 executes the ground state search (optimization calculation) using the annealing method for the above expression (2) to calculate the minimum value of the above expression (2), thereby determining the states of the bits that give the minimum value to the objective function expression.

Subsequently, the optimization processing unit 171 outputs an optimization result based on the states of the bits that give the minimum value to the above expression (2) (S213).

After completing the output of the optimization result, the optimization processing unit 171 ends the processing.

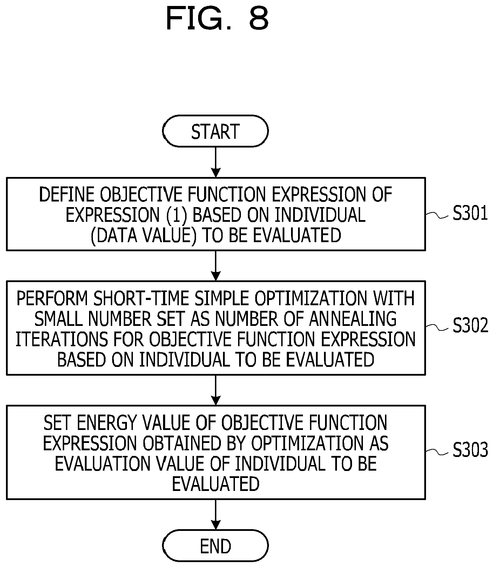

Next, with reference to FIG. 8, description will be given of an example of a sequence of the short-time simple evaluation (sub-flow 1) in the example of the technique disclosed herein.

First, the optimization processing unit 171 defines the objective function expression of the above expression (1) based on an individual (data value) to be evaluated (S301).

Next, the optimization processing unit 171 optimizes the objective function expression based on the individual to be evaluated by performing a short-time simple optimization in which the number of annealing iterations is set to a small number (S302). The optimization of the objective function expression using the annealing method may be performed in the same manner as in S211 and S212 described above.

The optimization processing unit 171 sets the energy value of the objective function expression obtained by the optimization as an evaluation value of the individual to be evaluated (S303). For example, at S303, the optimization processing unit 171 determines the evaluation value by performing a combinatorial optimization of discrete variables by the annealing method to obtain the minimum value of the objective function expression.

After completing the determination of the evaluation value, the optimization processing unit 171 ends the processing.

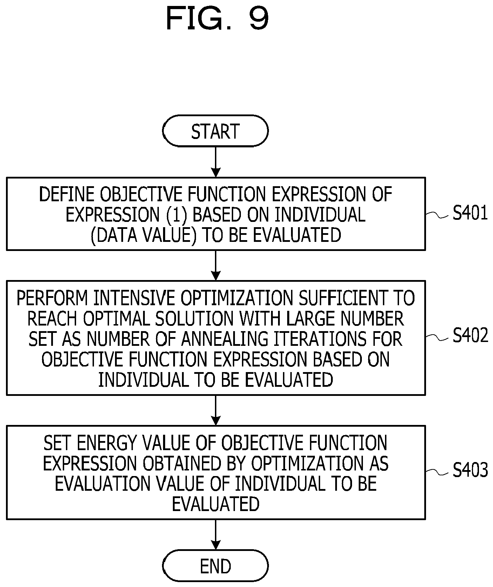

Next, with reference to FIG. 9, description will be given of an example of a sequence of an intensive evaluation sufficient to reach an optimal solution (sub-flow 2) in the example of the technique disclosed herein.

First, the optimization processing unit 171 defines the objective function expression of the above expression (1) based on an individual (data value) to be evaluated (S401).

Next, the optimization processing unit 171 optimizes the objective function expression based on the individual to be evaluated by performing an intensive optimization sufficient to reach an optimal solution in which the number of annealing iterations is set to a large number (S402).

The optimization processing unit 171 sets the energy value of the objective function expression obtained by the optimization as an evaluation value of the individual to be evaluated (S403).

After completing the determination of the evaluation value, the optimization processing unit 171 ends the processing.

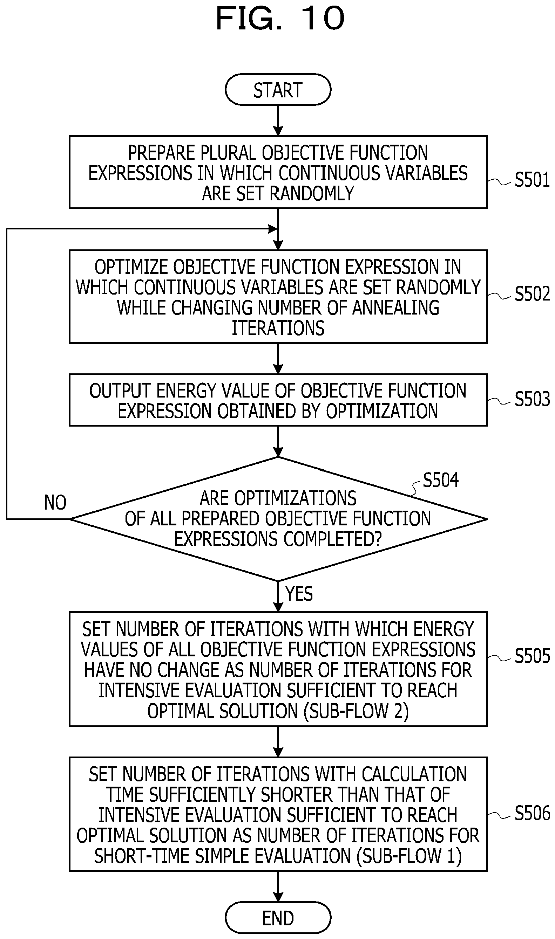

Next, with reference to FIG. 10, description will be given of an example of a sequence in which the number of annealing iterations in each of the short-time simple evaluation and the intensive evaluation in the case where these evaluations are switched and used is determined by using the example of the technique disclosed herein.

First, the optimization processing unit 171 prepares a plurality of objective function expressions (individuals having random data values) in which the continuous variables are randomly set (S501).

Next, the optimization processing unit 171 optimizes one of the objective function expressions in which the continuous variables are randomly set while changing the number of annealing iterations (S502). At S502, it is preferable that the optimization processing unit 171 change the number of iterations within a range including a number of iterations with which the objective function expression may be sufficiently optimized. The optimization of the objective function expression using the annealing method may be performed in the same manner as in S211 and S212 described above.

Subsequently, the optimization processing unit 171 outputs the energy value of the objective function expression obtained by the optimization (5503).

The optimization processing unit 171 determines whether the optimizations of all the prepared objective function expressions are completed (S504). At S504, the optimization processing unit 171 advances the processing to S505 when determining that the optimizations of all the objective function expressions are completed or returns the processing to S502 when determining that the optimizations of all the objective function expressions are yet to be completed. When the processing is returned to S502 at S504, the optimization processing unit 171 performs the processing at S502 to optimize another one of the objective function expressions yet to be optimized.

Next, the optimization processing unit 171 sets the number of iterations with which the energy values of all the objective function expressions have no change (the energy values are fixed as a result of sufficient optimizations) as the number of iterations for the intensive evaluation (sub-flow 2) sufficient to reach an optimal solution (S505).

Subsequently, the optimization processing unit 171 sets, as the number of iterations for the short-time simple evaluation (sub-flow 1), the number of iterations with a calculation time sufficiently shorter than the calculation time of the number of iterations for the intensive evaluation sufficient to reach an optimal solution (S506).

After completing the determination of the number of iterations for the sub-flow 1, the optimization processing unit 171 ends the processing.

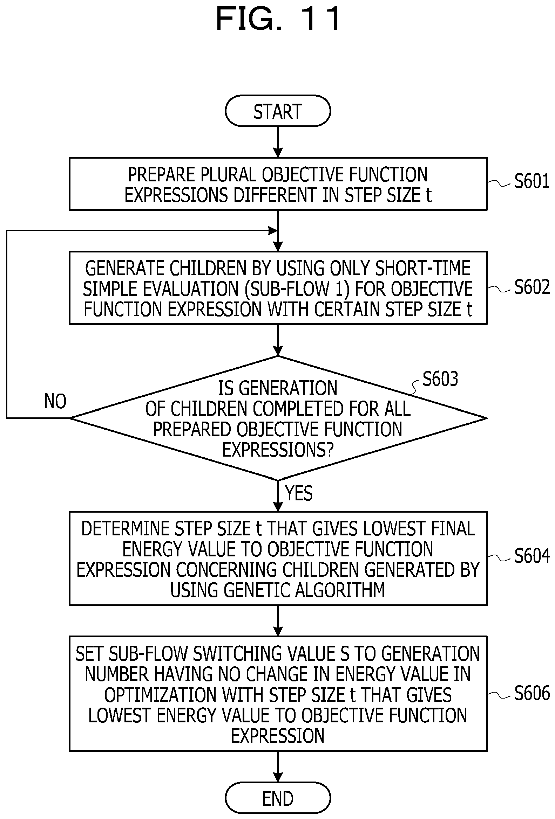

Next, with reference to FIG. 11, description will be given of an example of a sequence of determining the parameters of the genetic algorithm in advance by using the example of the technique disclosed herein.

First, the optimization processing unit 171 prepares a plurality of objective function expressions different in step size t (S601). At S601, the optimization processing unit 171 preferably prepares the objective function expressions by changing the step size t as appropriate within a range that the step size t may usually take.

Next, the optimization processing unit 171 generates children by using only the short-time simple evaluation (sub-flow 1) for the objective function expression with a certain step size t (S602). Details of S602 will be described later.

Subsequently, the optimization processing unit 171 determines whether or not the generation of children is completed for all the prepared objective function expressions (S603). At S603, the optimization processing unit 171 advances the processing to S604 when determining that the generation of the children is completed for all the objective function expressions, or returns the processing to S602 when determining that the generation of the children is yet to be completed for all the objective function expressions. When the processing is returned to S602 at S603, the optimization processing unit 171 performs the processing at S602 to generate children for another one of the objective function expressions for which the generation of children is yet to be completed.

Next, the optimization processing unit 171 determines the step size t that gives the lowest final energy value among the objective function expressions concerning the children generated by using the genetic algorithm (S604). For example, at S604, the optimization processing unit 171 determines the step size t that gives the lowest energy value as a result of the optimizations, as the step size t to be applied to an actual optimization.

Subsequently, the optimization processing unit 171 sets, as the sub-flow switching value S, the generation number having no change in the energy value in the optimization with the step size t that gives the lowest energy value to the objective function expression (S605). For example, at S605, the optimization processing unit 171 sets, as the sub-flow switching value (the generation number for switching the number of annealing iterations) S, the generation number having no change in the energy value in the optimization with the step size t that gives the lowest energy value to the objective function expression among the above-described optimizations for obtaining the step size t.

After completing the determination of the sub-flow switching value S, the optimization processing unit 171 ends the processing.

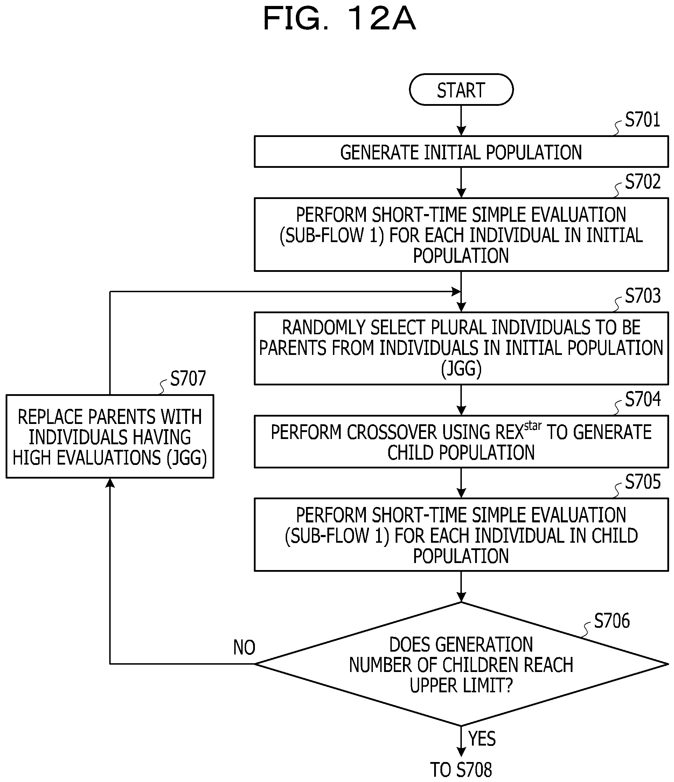

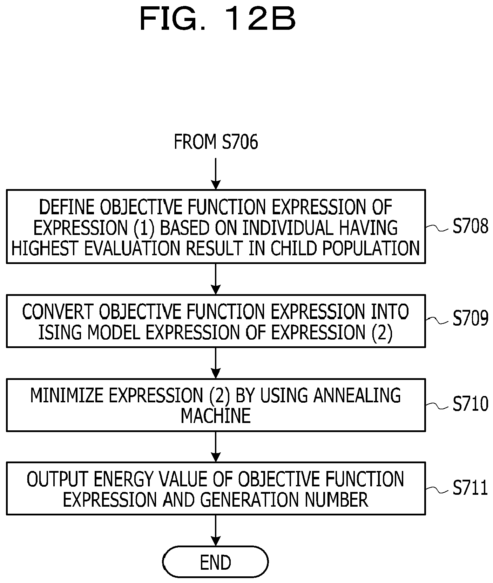

Next, an example of a detailed sequence at S602 in FIG. 11 will be described with reference to FIG. 12 (i.e., FIGs. 12A and 12B). Here, S701 to S704 in FIG. 12 may be performed in the same manner as S201 to S204 in FIG. 7, respectively. Also, S707 to S710 in FIG. 12 may be performed in the same manner as S209 to S212 in FIG. 7, respectively. Therefore, the description of the processing at these steps will be omitted below.

At S705, the optimization processing unit 171 performs a short-time simple evaluation (sub-flow 1) for each individual in the child population.

Next, the optimization processing unit 171 determines whether or not the generation number of the children reaches the upper limit (predetermined number), and advances the processing to S707 when determining that the generation number of the children is yet to reach the upper limit, or advances the processing to S708 when determining that the generation number of the children reaches the upper limit (S706).

After performing S710, the optimization processing unit 171 outputs the energy value of the objective function expression and the generation number (S710).

The optimization processing unit 171 ends the processing after completing the output of the energy value of the objective function expression and the generation number.

Although the sequence of the processing by using the example of the technique disclosed herein has been described in accordance with the specific order in FIGs. 7 to 12, the order of steps in the technique disclosed herein may be changed as appropriate within a technically possible range. In the technique disclosed herein, some of the steps may be collectively performed within a technically possible range.

An example of an annealing method and an annealing machine will be described below.

The annealing method is a method of obtaining a solution stochastically by using a random number value or a superposition of quantum bits. Hereinafter, a problem of minimizing a value of an evaluation function desired to be optimized will be described as an example, and the value of the evaluation function will be referred to as energy. When the value of the evaluation function is desired to be maximized, a sign of the evaluation function may be changed.

First, starting from initial states where one discrete value is assigned to each of variables, a state transition from current states (a combination of the values of the variables) to states close to the current states (for example, the states where only one of the variables is changed) is considered. A change in energy associated with the state transition is calculated, and whether to accept the state transition and change the states or to maintain the original states without accepting the state transition is stochastically determined according to the calculated value of the change in energy. When an acceptance probability for a case where the energy decreases is selected to be higher than the acceptance probability for a case where the energy increases, it is expected that a state change occurs in a direction in which the energy decreases on average and the states transition to more appropriate states over time. Thus, there is a possibility of finally obtaining an approximate solution giving energy at an optimal solution or close to an optimal value.

If the state transition is deterministically accepted in a case where the energy decreases or rejected in a case here the energy increases, the change in energy will be weakly decreasing over time. However, once a local solution is reached, the change will not occur any more. Since an extraordinarily large number of local solutions exist in a discrete optimization problem as described above, the states are often stuck at a local solution that is not very close to the optimal value. For this reason, in solving a discrete optimization problem, it is important to stochastically determine whether or not to accept the states.

In the annealing method, it has been proved that the states reach the optimal solution in the limit of an infinite number of times (number of iterations) by determining the acceptance probability of the state transition as follows.

Hereinafter, a sequence of a method of determining an optimal solution using the annealing method will be described.

(1) For an energy change (energy decrease) value (-ΔE) associated with a state transition, the acceptance probability p for the state transition is determined by any of the following functions f().

$$p(\Delta E, T) = f(-\Delta E / T)$$ (Expression 1-1)

$$f_{metro}(x) = \min(1, e^x)$$ (Metropolis Method)(Expression 1-2)

$$f_{Gibbs}(x) = \frac{1}{1 + e^{-x}}$$ (Gibbs Method)(Expression 1-3)

T is a parameter called a temperature value and may be changed, for example, as follows.

(2) The temperature value T is logarithmically decreased according to the number of iterations t as represented by the following expression.

$$T = \frac{T_0 \log(c)}{\log(t + c)}$$ (Expression 2)

$T_0$ denotes an initial temperature value and is desirably set to a sufficiently large value depending on the problem.

In a case where the acceptance probability expressed by the expression (1) is used and the steady states are reached after sufficient iterations, the probability of each state being occupied follows the Boltzmann distribution in a thermal equilibrium state in thermodynamics.

When the temperature gradually decreases from a high temperature, the probability of a low energy state being occupied increases. For this reason, when the temperature decreases sufficiently, it is expected to obtain the low energy states. This method is referred to as an annealing method (or simulated annealing method) because this behavior resembles a state change in annealing of a material. The stochastic occurrence of a state transition where the energy increases is equivalent to thermal excitation in physics.

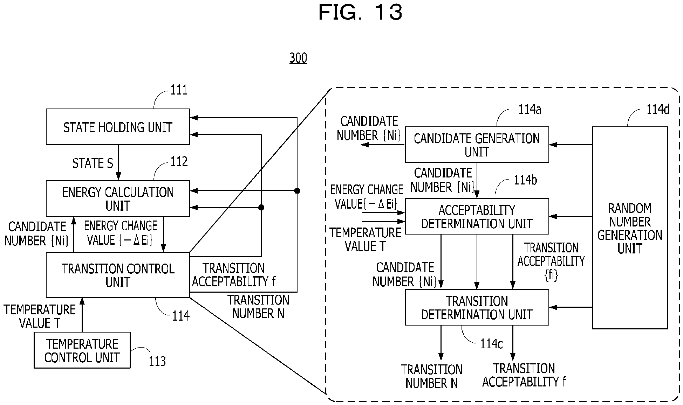

FIG. 13 illustrates an example of a functional configuration of an annealing machine that performs the annealing method. Although the following description will also explain a case where multiple candidates for the state transition are generated, one transition candidate is generated at one time in the basic annealing method.

An annealing machine 300 includes a state holding unit 111 that holds current states S (values of multiple state variables). The annealing machine 300 also includes an energy calculation unit 112 that calculates an energy change value {-ΔEi} for each of state transitions in a case where the state transition occurs from the current states S as a result of changing any of the values of the multiple state variables. The annealing machine 300 includes a temperature control unit 113 that controls a temperature value T and a transition control unit 114 that controls a state change. The annealing machine 300 may be configured as a part of the optimization apparatus 100 described above.

The transition control unit 114 stochastically determines whether or not to accept any one of multiple state transitions, depending on a relative relationship between the energy change value {-ΔEi} and thermal excitation energy based on the temperature value T, the energy change value {-ΔEi}, and a random number value.

The transition control unit 114 includes a candidate generation unit 114a that generates candidates for a state transition, and an acceptability determination unit 114b that stochastically determines whether or not the state transition in each of the candidates is acceptable based on the energy change value {-ΔEi} and the temperature value T. The transition control unit 114 includes a transition determination unit 114c that determines a candidate to be actually employed from the candidates determined as acceptable, and a random number generation unit 114d that generates a probability variable.

An operation in one iteration by the annealing machine 300 is as follows.

First, the candidate generation unit 114a generates one or more candidates (candidate No. {Ni}) for a state transition to the next states from the current states S held by the state holding unit 111. The energy calculation unit 112 calculates an energy change value {-ΔEi} for the state transition specified in each of the candidates by using the current states S and the candidate for the state transition. The acceptability determination unit 114b determines each of the state transitions as acceptable with the acceptance probability expressed by the above expression (1) according to the energy change value {-ΔEi} for the state transition by using the temperature value T generated in the temperature control unit 113 and the probability variable (random number value) generated in the random number generation unit 114d.

The acceptability determination unit 114b outputs the acceptability {fi} of each of the state transitions. In a case where multiple state transitions are determined as acceptable, the transition determination unit 114c randomly selects one of them by using a random number value. The transition determination unit 114c then outputs the transition number N and the transition acceptability f of the selected state transition. In a case where there is a state transition accepted, the values of the state variables stored in the state holding unit 111 are updated according to the accepted state transition.

Starting with the initial states, the above-described operation is iterated while causing the temperature control unit 113 to decrease the temperature value, and is ended when satisfying an end determination condition such as a condition where a certain number of iterations is reached or the energy falls below a predetermined value. The answer output by the annealing machine 300 is the states at the end.

The annealing machine 300 illustrated in FIG. 13 may be implemented by using, for example, a semiconductor integrated circuit. For example, the transition control unit 114 may include a random number generation circuit that functions as the random number generation unit 114d, a comparator circuit that functions as at least a part of the acceptability determination unit 114b, a noise table to be described later, and so on.

Regarding the transition control unit 114 illustrated in FIG. 13, a mechanism to accept a state transition with the acceptance probability expressed by the expression (1) will be described in more detail.

A circuit that outputs 1 with an acceptance probability p and outputs 0 with an acceptance probability (1-p) may be implemented by using a comparator that has two inputs A and B, and that outputs 1 when A > B and outputs 0 when A < B and by inputting the acceptance probability p to the input A and inputting a uniform random number having a value in the unit interval [0, 1) to the input B. Thus, it is possible to achieve the above function when the value of the acceptance probability p calculated by using the expression (1) based on the energy change value and the temperature value T is input to the input A of the comparator.

For example, provided that f denotes a function used in the expression (1), and u denotes a uniform random number having a value in the unit interval [0, 1), a circuit that outputs 1 when $f(\Delta E/T)$ is greater than u achieves the above function.

The circuit may achieve the same function as described above even when modified as follows.

Even when the same monotonically increasing function is applied to two numbers, the two numbers maintain the same magnitude relationship. Therefore, even when the same monotonically increasing function is applied to the two inputs of the comparator, the same output is obtained. When an inverse function $f^{-1}$ of f is used as this monotonically increasing function, it is seen that the circuit may be modified to a circuit that outputs 1 when $-\Delta E/T$ is greater than $f^{-1}(u)$. Since the temperature value T is positive, it is seen that a circuit that outputs 1 when $-\Delta E$ is greater than $Tf^{-1}(u)$ is usable.

The transition control unit 114 in FIG. 13 may include a noise table which is a conversion table for realizing the inverse function $f^{-1}(u)$, and which outputs a value of any of the following functions for an input of each discrete value within the unit interval [0, 1).

$$f_{metro}^{-1}(u) = \log(u)$$

(Expression 3-1)

$$f_{Gibbs}^{-1}(u) = \log\left(\frac{u}{1-u}\right)$$

(Expression 3-2)

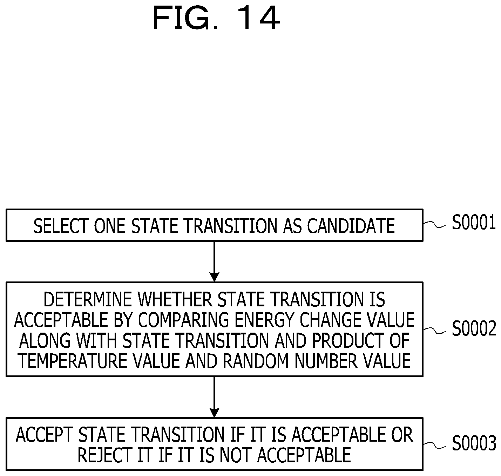

FIG. 14 illustrates one example of an operation flow of the transition control unit 114. The operation flow illustrated in FIG. 14 includes a step of selecting one state transition as a candidate (S0001), a step of determining whether the state transition is acceptable or not by comparing the energy change value for the state transition with a product of a temperature value and a random number value (S0002), and a step of accepting the state transition when the state transition is acceptable or rejecting the state transition when the state transition is not acceptable (S0003).

(Optimization Method)

An optimization method disclosed herein is an optimization method of optimizing an optimization problem represented by using an objective function expression including a continuous variable composed of continuous value data and a discrete variable composed of discrete value data.

The optimization method includes an optimization processing step of optimizing the objective function expression.

The optimization processing step includes

obtaining, as the continuous variable, an n-th generation data value group (n ≥ 1) including a plurality of data values selected from the continuous value data;

determining an evaluation value of each of the plurality of data values in the n-th generation data value group by performing optimization processing of the objective function expression by an annealing method using the n-th generation data value group;

obtaining an (n+1)-th generation data value group based on the evaluation values by using a genetic algorithm, the (n+1)-th generation data value group being different from the n-th generation data value group and including a plurality of data values selected from the continuous value data; and

replacing the n-th generation data value group with the (n+1)-th generation data value group as the continuous variable.

The optimization method disclosed herein may be performed by, for example, the optimization apparatus disclosed herein. A preferable embodiment of the optimization method disclosed herein may be similar to a preferable embodiment of the optimization apparatus disclosed herein, for example.

(Optimization Program)

An optimization program disclosed herein is an optimization program that causes a computer to optimize an optimization problem represented by using an objective function expression including a continuous variable composed of continuous value data and a discrete variable composed of discrete value data.

The optimization program causing the computer to execute a process of optimizing the objective function expression.

The process includes

obtaining, as the continuous variable, an n-th generation data value group (n ≥ 1) including a plurality of data values selected from the continuous value data,

determining an evaluation value of each of the plurality of data values in the n-th generation data value group by performing optimization processing of the objective function expression by an annealing method using the n-th generation data value group,

obtaining an (n+1)-th generation data value group based on the evaluation values by using a genetic algorithm, the (n+1)-th generation data value group being different from the n-th generation data value group and including a plurality of data values selected from the continuous value data, and

replacing the n-th generation data value group with the (n+1)-th generation data value group as the continuous variable.

The optimization program disclosed herein may be, for example, a program that causes a computer to execute the optimization method disclosed herein. A preferable embodiment of the optimization program disclosed herein may be similar to the preferable embodiment of the optimization apparatus disclosed herein.

The optimization program disclosed herein may be created using any of various known program languages according to a configuration of a computer system to be used, and a type, a version, and the like of an operating system.

The optimization program disclosed herein may be recorded on a recording medium such as a built-in hard disk, or an external hard disk, or may be recorded on a recording medium such as a CD-ROM, a DVD-ROM, an MO disk, or a USB memory.

In a case where the optimization program disclosed herein is recorded on the recording medium described above, the optimization program is directly used, or used by installing the optimization program on a hard disk, through a recording medium reading apparatus included in the computer system, as appropriate. The optimization program disclosed herein may be recorded in an external storage area (another computer or the like) accessible from the computer system through an information communication network. In this case, the optimization program disclosed herein and recorded in the external storage area may be directly used or be used by installing the optimization program on the hard disk from the external storage area through the information communication network, as appropriate.

The optimization program disclosed herein may be divided and recorded on a plurality of recording media for each arbitrary process.

(Computer Readable Recording Medium)

The computer readable recording medium disclosed herein is configured to record the optimization program disclosed herein.

The computer readable recording medium disclosed herein is not particularly limited, and may be selected according to the intended purpose as appropriate. Examples thereof include a built-in hard disk, an external hard disk, a CD-ROM, a DVD-ROM, an MO disk, a USB memory, and the like.

The computer readable recording medium disclosed herein may be a plurality of recording media in which the optimization program disclosed herein is divided and recorded for each arbitrary process.

[Example]

Although Example of the technique disclosed herein will be described, the technique disclosed herein is not limited to this Example at all.

As Example, coil positions and a magnet arrangement in a vibration-powered generator device were optimized by using an example of the optimization apparatus disclosed herein. In Example, the coil positions and the magnet arrangement in the vibration-powered generator device were optimized by using an optimization apparatus having the hardware configuration as illustrated in FIG. 5 and using the processing illustrated in the flowcharts of FIGs. 7 to 12 as appropriate.

Example used, as the genetic algorithm, a real-coded genetic algorithm (real-coded GA) in which the above-described "REX$^{star}$" was used as the crossover method and the above-described "JGG" was used as the generation alternation method. Digital Annealer (Registered Trademark) was used for minimization of the objective function expression (minimization of the Ising model expression of the expression (2)).

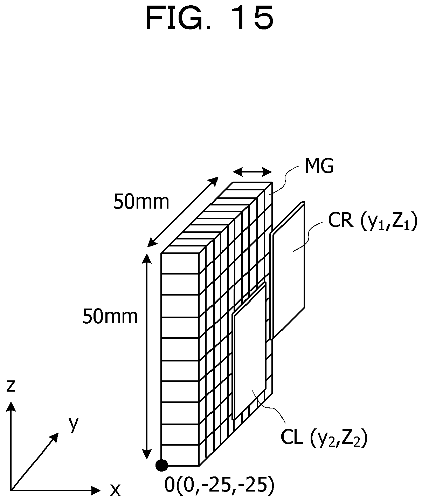

In Example, as illustrated in FIG. 15, the vibration-powered generator device to be analyzed includes 100 small magnets, and a clockwise coil CR and a counterclockwise coil CL on a plane where x = 15 mm. A magnet MG formed of the 100 small magnets oscillates by 25 mm in a z-axis direction.

Example is an example in which the center coordinates $(y_1, z_1)$ of the clockwise coil CR, the center coordinates $(y_2, z_2)$ of the counterclockwise coil CL, and the magnetization directions of the small magnets (arrangement of the small magnets) were optimized to maximize a magnetic flux $\Delta\varphi$ linking the coils. In Example, the center coordinates $(y_1, z_1)$ of the clockwise coil CR and the center coordinates $(y_2, z_2)$ of the counterclockwise coil CL are continuous variables, and the magnetization directions of the small magnets (arrangement of the small magnets) are discrete variables.

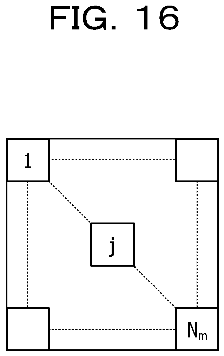

FIG. 16 illustrates an example of a state where the magnet MG is divided into $N_m$ small magnets. When the magnet MG is divided into $N_m$ small hexahedron magnets as illustrated in FIG. 16, the magnet MG is a set of $N_m$ small rectangular parallelepiped magnets. FIG. 16 illustrates an example of the magnet MG in plan view from the x-axis direction. As illustrated in FIG. 16, a j-th small magnet among the $N_m$ small magnets will be referred to as a small magnet $N_j$ by using j which is an integer of 1 to $N_m$.

In Example, as described above, the magnet MG was divided into the 100 small magnets as $N_m$ = 100.

An objective function expression in Example may be expressed by the following expression.

$$\mathcal{H} = \Delta\phi \rightarrow \max.$$

In the above expression,

H is an objective function expression to be optimized when a value thereof is maximized,
$\Delta\varphi$ is a change amount in flux linkage of the entirety of the coils of the magnetic device, and
"→max" is a symbol meaning to maximize the objective function expression.

Next, in Example, the objective function expression was formulated in the QUBO form.

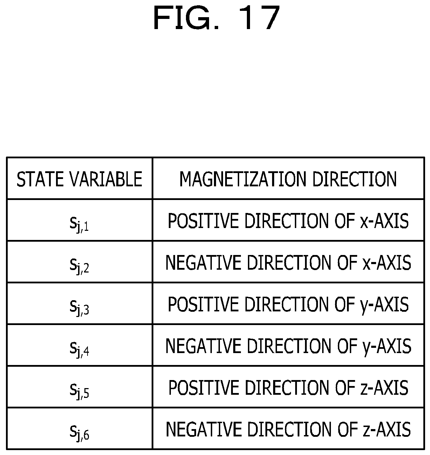

First, in Example, in order to express the optimization of the magnet arrangement as a combinatorial optimization problem with discrete variables, the arrangement of each small magnet is expressed by using a magnet region number j and a magnetization direction state number k. FIG. 17 illustrates an example of correspondences between small magnet state variables $s_{j,k}$ and magnetization directions in a j-th small magnet $N_j$ represented by the small magnet state variables

$s_{j,k}$. As illustrated in FIG. 17, since a small magnet state variable $s_{j,k}$ may express a magnetization direction different for each of state numbers k (k = 1, 2, 3, 4, 5, 6), the orientation of the small magnet may be uniquely expressed by the values (0 or 1) of the state variables $s_{j,k}$.

In Example, in order to determine the orientation of each small magnet to be in one direction or no magnet, conditions are determined such that any one of the state variables $s_{j,k}$ (k = 1, 2, 3, 4, 5, 6) is "1 (the orientation of the small magnet is in one direction)" or "all the state variables are 0 (no magnet)".

The technique disclosed in "A. Maruo, H. Igarashi, H. Oshima, and S. Shimokawa, "Optimization of Planar Magnet Array Using Digital Annealer," in IEEE Transactions on Magnetics, vol. 56, no. 3, pp. 1-4, March 2020, Art no.7512104, doi:10.1109/TMAG.2019.2957805." may be appropriately used concerning the optimization of the arrangement of the small magnets.

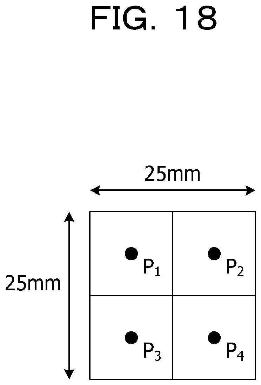

In Example, as illustrated in FIG. 18, each of the clockwise coil CR and the counterclockwise coil CL is divided into $N_c$ (4 in Example in FIG. 18) coil regions, and the coil regions are discretely treated by using points P. In Example, the length of one side of each coil is 25 mm.

In Example, when the coil is expressed as illustrated in FIG. 18, the change amounts $\Delta\varphi^{\text{right}}$ and $\Delta\varphi^{\text{left}}$ in the flux linkage of the clockwise coil CR and the counterclockwise coil CL may be calculated as follows.

$$\Delta\phi^{\text{right}}(y_1, z_1) = \sum_{i=1}^{N_c} \sum_{j=1}^{N_m} \sum_{k=1}^{6} \Delta\phi_{i,j,k}(y_1, z_1) s_{j,k}$$

$$\Delta\phi^{\text{left}}(y_2, z_2) = -\sum_{i=1}^{N_c} \sum_{j=1}^{N_m} \sum_{k=1}^{6} \Delta\phi_{i,j,k}(y_2, z_2) s_{j,k}$$

In the above expressions expressing the change amounts $\Delta\varphi^{\text{right}}$ and $\Delta\varphi^{\text{left}}$ in the flux linkage, $\Delta\varphi_{i,j,k}(y, z)$ denotes a change amount in flux linkage in a coil region $N_i$ generated from magnetization of a small magnet $N_j$ in the direction expressed by a state number k, and may be calculated by the following expression.

$$\Delta\phi_{i,j,k}(y, z) = B_{i,j,k}^x(y, z)A - B_{i,j,k}^x(y, z + \Delta z)A$$

In the above expression,

$\Delta\varphi_{i,j,k}(y, z)$ is a change amount in flux linkage in the coil region $N_i$ of a coil having the center coordinates "y, z", the flux linkage generated from the magnetization of the small magnet $N_j$ in the direction expressed by the state number k, $B_{i,j,k}^x(y, z)$ denotes a magnetic flux density in the x-axis direction before change at the center point of the i-th coil region $N_i$ in the coil having the center coordinates "y, z", the magnetic flux density generated from the magnetization of the small magnet $N_j$ in the direction expressed by the state number k, $B_{i,j,k}^x(z + \Delta z)$ denotes a magnetic flux density in the x-axis direction at the center point of the i-th coil region $N_i$ after the magnet is moved by $\Delta z$ in the z-axis direction, the magnetic flux density generated from the magnetization of the small magnet $N_j$ in the direction expressed by the state number k, and A is the area of the coil region (cross-sectional area of the coil). $B_{i,j,k}^x(z)$ in the above expression will be described in more detail.

Using Biot-Savart law, which is a physical law of electromagnetism, a magnetic flux density B (B is a vector quantity) generated at an observation point P from a magnet having magnetization M may be expressed by the following expression.

$$B = -\frac{1}{4\pi} \nabla \left( \int_V M \cdot \nabla \left(\frac{1}{r}\right) dV \right)$$

In the above expression, r is a distance from a source point (for example, the center point of a small magnet) to the observation point P.

By using the above expression, the magnetic flux density $B_{i,j,k}$ ($B_{i,j,k}$ is a vector quantity) generated at the center point of the i-th coil region Ni from the magnetization of the small magnet $N_j$ in the direction expressed by the state number k may be expressed by the following expression.

$$B_{i,j,k} = -\frac{1}{4\pi} \nabla \left( \int_V M_{j,k} \cdot \nabla \left(\frac{1}{r_i}\right) dV \right) = \left( B^x_{i,j,k}, B^y_{i,j,k}, B^z_{i,j,k} \right)$$

In the above expression,

$r_i$ is the distance from the source point (for example, the center point of the small magnet) to the i-th coil region Ni, and $M_{j,k}$ is magnetization of the small magnet $N_j$ in the direction expressed by the state number k.

In Example, the component of the magnetic flux density in the x-axis direction is a component linking the coils, and therefore $B^x_{i,j,k}$, which is the x component of $B_{i,j,k}$ in the above expression, is the magnetic flux density linking the coils. Thus, the change amount $\Delta\varphi'_{i,j,k}$ in the flux linkage in the coil region Ni may be expressed by using $B^x_{i,j,k}$.

As is apparent from the above expression which includes the distance $r_i$ from the source point to the i-th coil region Ni, $B^x_{i,j,k}$ changes depending on the distance between the coil region $N_i$ and the small magnet $N_j$. Thus, by determining the change amount $\Delta\varphi'_{i,j,k}$ in the flux linkage in the coil region $N_i$ based on the above expression, the change amount in the flux linkage in the coil may be optimized in consideration of the distance between the coil region $N_i$ and the small magnet $N_j$.

By using the above expressions, the objective function expression in Example may be represented by the following expression as the QUBO form.

$$\mathcal{H} = \Delta\phi^{\text{right}}(y_1, z_1) + \Delta\phi^{\text{left}}(y_2, z_2) - \alpha \sum_{j=1}^{N_m} \sum_{n=1}^{6} \sum_{l=1(l \neq n)}^{6} s_{j,n} s_{j,l} \to \max.$$

In the above expression, the first term on the right side denotes a change amount in the flux linkage in the clockwise coil CR, and the second term on the right side denotes a change amount in the flux linkage in the counterclockwise coil CL. In the above expression, the third term on the right side is a constraint term representing a constraint that any one of the state variables $s_{j,k}$ (k = 1, 2, 3, 4, 5, 6) is "1" or all of the state variables are "0". For example, the third term on the right side in the above expression is a penalty term that increases the value of the objective function expression when two or more of the state numbers k have "1" in $s_{j,k}$ (k = 1, 2, 3, 4, 5, 6), or for example, when two or more of the state variables $s_{j,k}$ are "1". For this reason, for example, by setting $\alpha$ to a large value, it is possible to perform the optimization by more reliably excluding a case where two or more of the state variables $s_{j,k}$ are "1".

"→max" is a symbol meaning to maximize the objective function expression.

In order to optimize the objective function expression by the annealing method (annealing) using the annealing machine described above, the objective function expression has to be expressed in such a form that the objective function is optimized when the objective function expression is minimized. To this end, when the above objective function expression is modified so as to be optimized when minimized, the objective function expression may be represented as the following expression.

$$E = -\mathcal{H} = -\Delta\phi^{\mathrm{right}}(y_1, z_1) - \Delta\phi^{\mathrm{left}}(y_2, z_2) + \alpha \sum_{j=1}^{N_m} \sum_{n=1}^{6} \sum_{l=1(l \neq n)}^{6} s_{j,n} s_{j,l} \to \min$$

This expression is an expression modified by multiplying both sides of the objective function expression by "minus (-)" so as to be optimized when minimized.

Here, E is an objective function expression optimized when the value of E is minimized.

"→min" is a symbol meaning to minimize the objective function expression.

In the above objective function expression, the first term and the second term on the right side (change amounts in the flux linkage of the coils) are values dependent on the continuous variables y and z.

<Determination of Number of Annealing Iterations>

Next, in Example, in accordance with the flowchart illustrated in FIG. 10, the number of annealing iterations was determined in each of the short-time simple evaluation and the intensive evaluation in the case where these evaluations were switched and used.

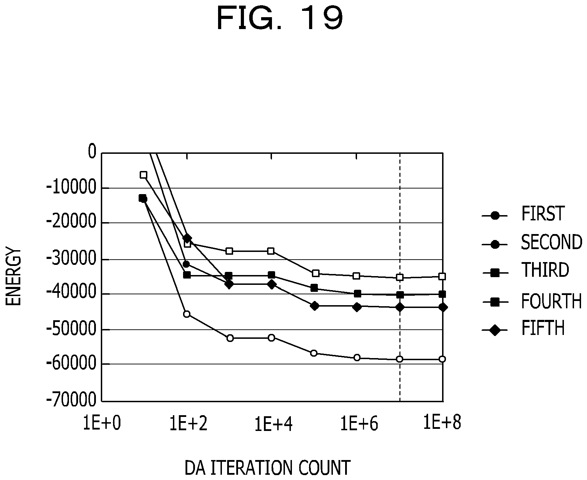

For example, five objective function expressions in which the continuous variables "$y_1$, $z_1$, $y_2$, $z_2$" were set randomly (using random numbers) were prepared, and a short-time simple optimization was performed on each of these objective function expressions. FIG. 19 illustrates an example of a relationship between the number of annealing iterations for each of the objective function expressions in which the continuous variables were set randomly and an energy value of the objective function expression in Example. In FIG. 19, the horizontal axis represents the number of annealing iterations (DA iteration count), and the vertical axis represents the energy value (Energy) of the objective function expression.

As illustrated in FIG. 19, in Example, when the DA iteration count is about "1E+7 ($10^7$)", the energy values of all the five objective function expressions have no change (the energy values are fixed as a result of sufficient optimizations). Thus, in Example, the number of iterations in the intensive evaluation sufficient to reach an optimal solution (sub-flow 2 iteration count) was set to $10^7$.

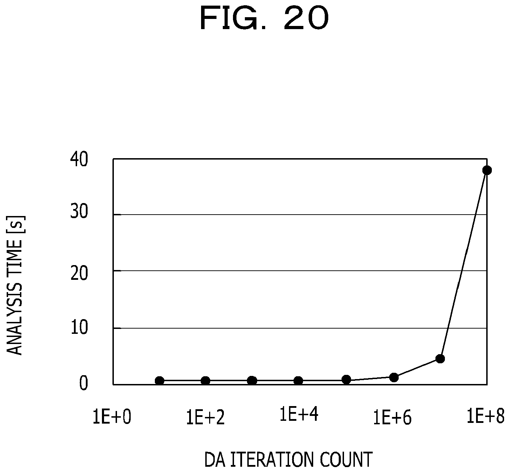

FIG. 20 illustrates an example of the relationship between the number of annealing iterations and the analysis time requested for an optimization by the annealing method for the objective function expression in which the continuous variables were set randomly in Example. In FIG. 20, the horizontal axis represents the number of annealing iterations (DA iteration count), and the vertical axis represents an analysis time (calculation time) requested for the optimization by the annealing method.

As illustrated in FIG. 20, it is seen that the calculation time for "1E+6 ($10^6$)" or less iterations is shorter than the calculation time for $10^7$ iterations, which is the number of iterations for the intensive evaluation sufficient to reach an optimal solution (sub-flow 2 iteration count). For this reason, in Example, the number of iterations with a sufficiently short calculation time (sub-flow 1 iteration count) was set to $10^5$.

<Determination of Parameters of Genetic Algorithm>

Subsequently, in Example, the parameters of the genetic algorithm for replacing the n-th generation data value group with the (n+1)-th generation data value group were determined according to the flowcharts illustrated in FIGs. 11 and 12.

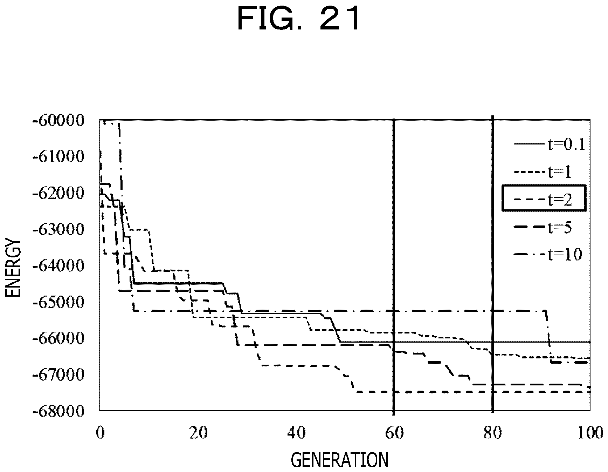

For example, the short-time simple optimizations were performed on the plurality of objective function expressions in which the value of the step size t was set to "0.1, 1, 2, 5, and 10", respectively, until the generation number of the data value group (population) reached 100. FIG. 21 illustrates an example of a relationship between the generation number of a data value group (population) of each of the objective function expressions in which the different values were set as the step size t and an energy value of the objective function expression in Example. In FIG. 21, the horizontal axis represents the generation number (Generation) of a data value group, and the vertical axis represents an energy value (Energy) of an objective function expression.

In Example, as illustrated in FIG. 21, since the objective function expression where the step size is "t = 2" has the lowest energy value, the step size t for an actual optimization of the vibration-powered generator device was set to 2.

As illustrated in FIG. 21, in Example, the generation number (S) for switching the number of annealing iterations was set to 60, which is the generation number having no change in the energy value in the optimization where the step size t is 2 that gives the lowest energy value to the objective function expression.

As illustrated in FIG. 21, in Example, the upper limit generation number (genetic algorithm iteration count; G) was set based on the generation number S for switching (60 generations) in accordance with "G = S + (S/3) = (4/3)S", and thus was set to "G = 60 generations + 20 generations = 80 generations".

<Optimization of Vibration-Powered Generator Device>

In Example, the coil positions and the magnet arrangement in the vibration-powered generator device were optimized by optimizing the objective function expression according to the flowchart illustrated in FIG. 7 using the set parameters.

In Example, the optimization parameters in the following list were set as described above.

- Number of iterations with a sufficiently short calculation time (sub-flow 1 iteration count): $10^5$
- Number of iterations for an intensive evaluation sufficient to reach an optimal solution (sub-flow 2 iteration count): $10^7$
- Step size: t = 2
- Switching generation number: S = 60
- Upper limit generation number (genetic algorithm iteration count): G = 80

In the optimization of the continuous variables by the real-coded genetic algorithm, parameters related to the number of data values (individuals) in a data value group (population) to be generated was set as follows by assigning 4, which is the number of the continuous variables, to a dimension n.

- Number of initial individuals: 5n = 20
- Number of parents: n+1 = 5
- Number of children: 4n = 16

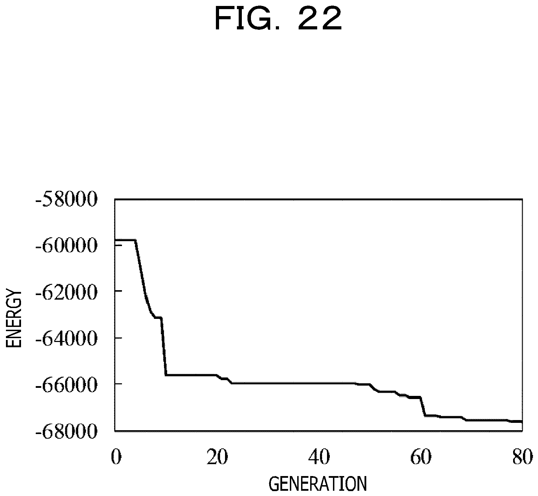

FIG. 22 illustrates an example of a relationship between the generation number of a data value group (population) for an objective function expression for optimizing the coil positions and the magnet arrangement in the vibration-powered generator device and an energy value of the objective function expression in Example. In FIG. 22, the horizontal axis represents the generation number (Generation) of a data value group, and the vertical axis represents an energy value (Energy) of the objective function expression.

As illustrated in FIG. 22, it is found that the energy value of the objective function expression was significantly reduced around the 60th generation, which was set as the generation number S for switching the number of annealing iterations. This is presumably because the evaluations at and after the 60th generation set as the generation number S for switching the number of annealing iterations were performed by using the number of iterations for the intensive evaluation sufficient to reach an optimal solution (sub-flow 2 iteration count).

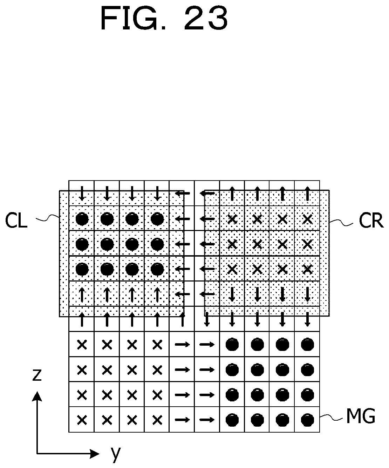

FIG. 23 illustrates an example of the arrangement and others of the coils and the magnets as a result of the optimization of the coil positions and the magnet arrangement in the vibration-powered generator device in Example. In FIG. 23, an arrow of a small magnet in the magnet MG means that its magnetization direction is a direction indicated by the arrow. In FIG. 23, a circle mark of a small magnet in the magnet MG means that its magnetization direction is the front side direction of the drawing (positive direction of the x-axis). A cross sign ($\times$) of a small magnet in the magnet MG means that its magnetization direction is the back side direction of the drawing (negative direction of the x-axis).

As illustrated in FIG. 23, in Example, it is seen that the positions of the coils and the magnetization directions of the small magnets are set such that the change amount in the flux linkage of the clockwise coil CR and the counterclockwise coil CL increases when the magnet MG oscillates along the z-axis. In the example illustrated in FIG. 23, the change amount $\Delta\varphi$ in the flux linkage of the clockwise coil CR and the counterclockwise coil CL was "$6.76 \times 10^{-4}$ (Wb)". The center coordinates $(y_1, z_1)$ of the clockwise coil CR were "13.99, 11.55 (mm)", and the center coordinates $(y_2, z_2)$ of the counterclockwise coil CL are "-13.99,11.66 (mm)".

<Calculation Cost (Calculation Time)>

As described above, in Example, the number of initial individuals was 20, the number of parents was 5, and the number of children was 16. Therefore, in Example, evaluations by the annealing method were performed on 5 reflections derived from the parents and 16 children per generation.

Therefore, in Example, the number of individuals generated in the 1st to 60th generations is 1280 where "20 + 60 x 21 = 1280". In Example, since the upper limit generation number G was set to 80, the number of individuals generated after the 60th generation is 420 where "20 x 21 = 420". In Example, the total number of the individuals generated until the optimization is completed is 1700 where "1280 + 420 = 1700".

In Example, as described above, the number of iterations with a sufficiently short calculation time (sub-flow 1 iteration count) was set to $10^5$, and the number of iterations for the intensive evaluation sufficient to reach an optimal solution (sub-flow 2 iteration count) was set to $10^7$. The calculation time (analysis time) with the number of iterations with a sufficiently short calculation time was "0.79 seconds", and the calculation time with the number of iterations for the intensive evaluation sufficient to reach an optimal solution was "4.46 seconds".

The total calculation time in Example was calculated to be 2884 seconds where "0.79 x 1280 + 4.46 x 420 = 2884", for example, about 48 minutes.

For comparison, all the individuals were evaluated with the number of iterations for the intensive evaluation sufficient to reach an optimal solution ($10^7$ iterations) without switching the number of iterations in the evaluations of the individuals by the annealing method according to the generation number. In this example, the total calculation time was calculated to be 7582 seconds where "4.46 x 1700 = 7582", for example, about 126 minutes.

From these results, it was confirmed that the appropriate switching of the number of iterations in the evaluations of the individuals by the annealing method according to the generation number makes it possible to significantly save the calculation cost and reduce the calculation time to half or less.

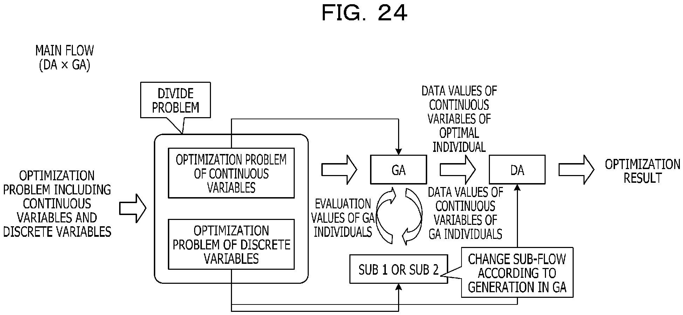

FIG. 24 illustrates an example of a sequence of processing according to an embodiment of the technique disclosed herein.

As illustrated in FIG. 24, in the main flow (annealing method (DA) x genetic algorithm (GA)) in the embodiment of the technique disclosed herein, an optimization problem including continuous variables and discrete variables is divided into a continuous variable optimization problem and a discrete variable optimization problem (combinatorial optimization problem).

In the main flow in the embodiment of the technique disclosed herein, a population (population of GA individuals; data value group) is generated for the continuous variable optimization problem by using the genetic algorithm (GA). Next, in the main flow in the embodiment of the technique disclosed herein, an evaluation using the annealing method (annealing) is performed in the sub-flow (sub 1 or sub 2) based on the data values of the continuous variables of the GA individuals having high evaluations to determine the evaluation values of the GA individuals. In the sub-flow, the number of iterations with a sufficiently short calculation time (sub 1) and the number of iterations for the intensive evaluation sufficient to reach an optimal solution (sub 2) are switched in accordance with the generation number in the GA.

Next, as illustrated in FIG. 24, in the main flow in the embodiment of the technique disclosed herein, the generation of GA individuals by the genetic algorithm (GA) and the evaluation of the GA individuals by the annealing method (DA) are iterated until a predetermined generation number is reached.

Subsequently, in the main flow in the embodiment of the technique disclosed herein, the objective function expression is optimized by the annealing method (DA) based on the data values of the continuous variables of the finally obtained optimal GA individual (GA individual having the highest evaluation value).

In the main flow in the embodiment of the technique disclosed herein, information on a result of the optimization (arrangement of members and others in a device) is output.

In the embodiment of the technique disclosed herein, it is possible to efficiently optimize an optimization problem including both of continuous variables and discrete variables, for example, by performing the processing as illustrated in FIG. 24, while saving the calculation cost requested for the optimization.

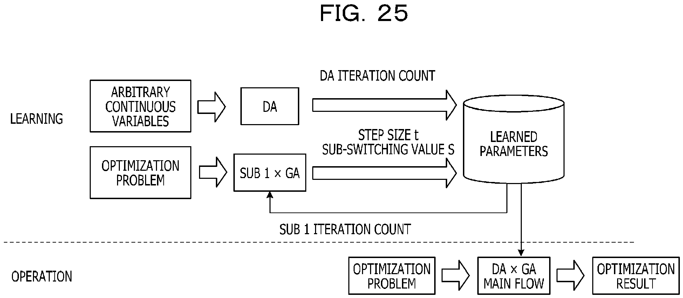

FIG. 25 illustrates another example of a sequence of processing according to an embodiment of the technique disclosed herein.

As illustrated in FIG. 25, in a learning flow in the embodiment of the technique disclosed herein, first, objective function expressions in which the continuous variables in the optimization problem are arbitrarily (randomly) set are prepared, and the short-time simple optimization (DA in the sub 1) is performed on these objective function expressions. Next, in the learning flow in the embodiment of the technique disclosed herein, the number of iterations with which the energy values in all the objective function expressions have no change is set as the number of iterations for the intensive evaluation (sub 2) sufficient to reach an optimal solution. In the learning flow in the embodiment of the technique disclosed herein, the number of iterations with a calculation time sufficiently shorter than the calculation time of the number of iterations for the intensive evaluation sufficient to reach an optimal solution is set as the number of iterations for the short-time simple evaluation (sub 1).

Subsequently, in the learning flow in the embodiment of the technique disclosed herein, the determined numbers of annealing (DA) iterations are recorded as learned parameters in a database.

In the learning flow in the embodiment of the technique disclosed herein, for each of the objective function expressions different in the value of the step size t in the target optimization problem, the short-time simple optimization (sub 1) and the generation of individuals by the genetic algorithm (GA) are performed. The step size t that gives the lowest energy value as a result of the optimizations and the generation number S for switching the number of iterations (sub-switching value) are determined.

Subsequently, in the learning flow in the embodiment of the technique disclosed herein, the step size t and the sub-switching value S are recorded as learned parameters in the database.

Next, in an operation flow in the embodiment of the technique disclosed herein, the optimization problem is optimized according to the main flow described above by using the parameters recorded in the database as the learned parameters, and the optimization result is output.

In the embodiment of the technique disclosed herein, it is possible to optimize an optimization problem including both of continuous variables and discrete variables, for example, after setting more appropriate parameters by performing the processing as illustrated in FIG. 25. Therefore, in the embodiment of the technique disclosed herein, it is possible to perform an optimization with high accuracy efficiently while further saving the calculation cost, for example, by performing the processing as illustrated in FIG. 25.

The following appendices are further disclosed regarding the above embodiments.

**Claims**

1. An optimization apparatus configured to optimize an optimization problem represented by using an objective function expression including a continuous variable composed of continuous value data and a discrete variable composed of discrete value data,
   the optimization apparatus comprising:

   a memory; and
   a processor coupled to the memory, the processor being configured to perform processing, the processing including:

   obtaining, as the continuous variable, an n-th generation data value group (n ≥ 1) including a plurality of data values selected from the continuous value data;
   determining an evaluation value of each of the plurality of data values in the n-th generation data value group by performing optimization processing on the objective function expression by an annealing method using the n-th generation data value group;
   obtaining an (n+1)-th generation data value group based on the evaluation values by using a genetic algorithm, the (n+1)-th generation data value group being different from the n-th generation data value group and including a plurality of data values selected from the continuous value data; and
   replacing the n-th generation data value group with the (n+1)-th generation data value group as the continuous variable.

2. The optimization apparatus according to claim 1, wherein

   when the optimization processing unit determines the evaluation value of each of the plurality of data values in the n-th generation data value group,
   the optimization processing unit controls the number of executions of the optimization processing according to a generation number of the n-th generation data value group.

3. The optimization apparatus according to claim 2, wherein

   when the generation number of the n-th generation data value group is equal to or less than a predetermined number,
   the optimization processing unit reduces the number of executions of the optimization processing.

4. The optimization apparatus according to any one of claims 1 to 3, wherein
   the optimization processing unit performs the optimization processing represented by the following expression (1):

$$E(\boldsymbol{s}, \boldsymbol{x}) = -\sum_{i,j=0} w(\boldsymbol{x})_{ij} s_i s_j - \sum_{i=0} b(\boldsymbol{x})_i s_i + c(\boldsymbol{x})$$

## Expression (1)

in the expression (1),

E(s, x) is an objective function expression,
w(x)$_{ij}$ is a coefficient for weighting between an i-th bit and a j-th bit, a magnitude of which is determined by a value of x that represents the continuous variable,
$s_i$ is a binary variable indicating that the i-th bit is 0 or 1,
$s_j$ is a binary variable indicating that the j-th bit is 0 or 1,

b(x)$_i$ is a numerical value representing a bias for the i-th bit, a value of the bias being determined by the value of x that represents the continuous variable, and
c(x) is a constant, a magnitude of which is determined by the value of x that represents the continuous variable.

5. The optimization apparatus according to claim 4, wherein
the optimization processing unit performs the optimization processing based on the objective function expression converted into an Ising model expression represented by the following expression (2):

$$E(s) = - \sum_{i,j=0} w_{ij}\, s_i s_j - \sum_{i=0} b_i s_i + const.$$

**Expression (2)**

in the expression (2),

E(s) is the objective function expression converted into the Ising model expression,
$w_{ij}$ is a coefficient for weighting between an i-th bit and a j-th bit, $b_i$ is a numerical value representing a bias for the i-th bit,
$s_i$ is a binary variable indicating that the i-th bit is 0 or 1,
$s_j$ is a binary variable indicating that the j-th bit is 0 or 1, and const. is a constant.

6. The optimization apparatus according to claim 5, wherein the optimization processing unit performs the optimization processing by minimizing the Ising model expression converted from the objective function expression by the annealing method.

7. A computer implemented optimization method of optimizing an optimization problem represented by using an objective function expression including a continuous variable composed of continuous value data and a discrete variable composed of discrete value data,

the optimization method comprising optimizing the objective function expression, wherein
the optimizing the objective function expression includes
obtaining, as the continuous variable, an n-th generation data value group (n ≥ 1) including a plurality of data values selected from the continuous value data,
determining an evaluation value of each of the plurality of data values in the n-th generation data value group by performing optimization processing on the objective function expression by an annealing method using the n-th generation data value group,
obtaining an (n+1)-th generation data value group based on the evaluation values by using a genetic algorithm, the (n+1)-th generation data value group being different from the n-th generation data value group and including a plurality of data values selected from the continuous value data, and
replacing the n-th generation data value group with the (n+1)-th generation data value group as the continuous variable.

8. A non-transitory computer-readable storage medium storing an optimization program for causing a computer to perform optimization processing of optimizing an optimization problem represented by using an objective function expression including a continuous variable composed of continuous value data and a discrete variable composed of discrete value data,
the optimization processing comprising optimizing:

obtaining, as the continuous variable, an n-th generation data value group (n ≥ 1) including a plurality of data values selected from the continuous value data;
determining an evaluation value of each of the plurality of data values in the n-th generation data value group by performing optimization processing on the objective function expression by an annealing method using the n-th generation data value group;

obtaining an (n+1)-th generation data value group based on the evaluation values by using a genetic algorithm, the (n+1)-th generation data value group being different from the n-th generation data value group and including a plurality of data values selected from the continuous value data; and

replacing the n-th generation data value group with the (n+1)-th generation data value group as the continuous variable.

## FIG. 1A

## FIG. 1B

ROTATION AXIS

RADIAL DIRECTION

CIRCUMFERENTIAL DIRECTION

# FIG. 2

START

S101
GENERATE INITIAL POPULATION

S102
EVALUATE EACH INDIVIDUAL IN INITIAL POPULATION

S103
RANDOMLY SELECT PLURAL INDIVIDUALS TO BE PARENTS FROM INDIVIDUALS IN INITIAL POPULATION (JGG)

S104
GENERATE CHILD POPULATION BY PERFORMING CROSSOVER USING REX$^{star}$

S105
EVALUATE EACH INDIVIDUAL IN CHILD POPULATION

106
DOES GENERATION NUMBER OF CHILDREN REACH UPPER LIMIT?

NO

YES

S107
REPLACE PARENTS WITH INDIVIDUALS HAVING HIGH EVALUATIONS (JGG)

END

# FIG. 3

# FIG. 4

100

## OPTIMIZATION APPARATUS

| 101 | 102 | 103 | 104 |
|---|---|---|---|
| CONTROL UNIT | MAIN STORAGE DEVICE | AUXILIARY STORAGE DEVICE | I/O INTERFACE |

109

| 105 | 106 | 107 | 108 |
|---|---|---|---|
| COMMUNICATION INTERFACE | INPUT DEVICE | OUTPUT DEVICE | DISPLAY DEVICE |

# FIG. 5

<u>100</u>

```
                                                              ⌐200
┌──────────────────────────────────────────────────────────────────────┐
│   ⌐101a              ⌐102              ⌐103              ⌐104          │
│  ┌──────────────┐  ┌──────────────┐  ┌──────────────┐  ┌──────────────┐│
│  │CONTROL UNIT  │  │MAIN STORAGE  │  │AUXILIARY     │  │I/O INTERFACE ││
│  │              │  │DEVICE        │  │STORAGE DEVICE│  │              ││
│  └──────────────┘  └──────────────┘  └──────────────┘  └──────────────┘│
│                                                          ⌐109          │
│   ⌐105              ⌐106              ⌐107              ⌐108           │
│  ┌──────────────┐  ┌──────────────┐  ┌──────────────┐  ┌──────────────┐│
│  │COMMUNICATION │  │INPUT DEVICE  │  │OUTPUT DEVICE │  │DISPLAY DEVICE││
│  │INTERFACE     │  │              │  │              │  │              ││
│  └──────────────┘  └──────────────┘  └──────────────┘  └──────────────┘│
└──────────────────────────────────────────────────────────────────────┘
```

⊗ ～400

```
                                      ⌐300
        ┌──────────────────────────────────────────┐
        │   ⌐101b              ⌐102                │
        │  ┌──────────────┐  ┌──────────────┐       │
        │  │CONTROL UNIT  │  │MAIN STORAGE  │       │
        │  │              │  │DEVICE        │       │
        │  └──────────────┘  └──────────────┘       │
        │                      ⌐109                 │
        │   ⌐105              ⌐103                 │
        │  ┌──────────────┐  ┌──────────────┐       │
        │  │COMMUNICATION │  │AUXILIARY     │       │
        │  │INTERFACE     │  │STORAGE DEVICE│       │
        │  └──────────────┘  └──────────────┘       │
        └──────────────────────────────────────────┘
```

# FIG. 6

100

### OPTIMIZATION APPARATUS

120

**COMMUNICATION FUNCTION UNIT**

130

**INPUT FUNCTION UNIT**

140

**OUTPUT FUNCTION UNIT**

150

**DISPLAY FUNCTION UNIT**

160

**STORAGE FUNCTION UNIT**

170

**CONTROL FUNCTION UNIT**

171

**OPTIMIZATION PROCESSING UNIT**

# FIG. 7A

START

S201

GENERATE INITIAL POPULATION

S202

PERFORM SHORT-TIME SIMPLE EVALUATION (SUB-FLOW 1) FOR EACH INDIVIDUAL IN INITIAL POPULATION

S203

RANDOMLY SELECT PLURAL INDIVIDUALS TO BE PARENTS FROM INDIVIDUALS IN INITIAL POPULATION (JGG)

S204

GENERATE CHILD POPULATION BY PERFORMING CROSSOVER USING REX$^{star}$

S205

IS GENERATION NUMBER OF CHILDREN EQUAL TO OR LESS THAN SUB-SWITCHING VALUE S?

NO

S207

PERFORM INTENSIVE EVALUATION (SUB-FLOW 2) SUFFICIENT TO REACH OPTIMAL SOLUTION FOR EACH INDIVIDUAL IN CHILD POPULATION

YES

S206

PERFORM SHORT-TIME SIMPLE EVALUATION (SUB-FLOW 1) FOR EACH INDIVIDUAL IN CHILD POPULATION

S208

DOES GENERATION NUMBER OF CHILDREN REACH UPPER LIMIT?

NO

S209

REPLACE PARENTS WITH INDIVIDUALS HAVING HIGH EVALUATIONS (JGG)

YES

TO S210

# FIG. 7B

FROM S208

DEFINE OBJECTIVE FUNCTION EXPRESSION OF EXPRESSION (1) BASED ON INDIVIDUAL HAVING HIGHEST EVALUATION RESULT IN CHILD POPULATION ~ S210

CONVERT OBJECTIVE FUNCTION EXPRESSION INTO ISING MODEL EXPRESSION OF EXPRESSION (2) ~ S211

MINIMIZE EXPRESSION (2) BY USING ANNEALING MACHINE ~ S212

OUTPUT RESULT OF OPTIMIZATION BASED ON STATES OF BITS THAT GIVE MINIMUM VALUE TO EXPRESSION (2) ~ S213

END

# FIG. 8

```
        ( START )
            │
            ▼
┌─────────────────────────────────────┐
│  DEFINE OBJECTIVE FUNCTION EXPRESSION OF │
│  EXPRESSION (1) BASED ON INDIVIDUAL      │  ∿ S301
│  (DATA VALUE) TO BE EVALUATED            │
└─────────────────────────────────────┘
            │
            ▼
┌─────────────────────────────────────┐
│  PERFORM SHORT-TIME SIMPLE OPTIMIZATION WITH │
│  SMALL NUMBER SET AS NUMBER OF ANNEALING     │  ∿ S302
│  ITERATIONS FOR OBJECTIVE FUNCTION EXPRESSION │
│  BASED ON INDIVIDUAL TO BE EVALUATED         │
└─────────────────────────────────────┘
            │
            ▼
┌─────────────────────────────────────┐
│  SET ENERGY VALUE OF OBJECTIVE FUNCTION │
│  EXPRESSION OBTAINED BY OPTIMIZATION AS  │  ∿ S303
│  EVALUATION VALUE OF INDIVIDUAL TO BE    │
│  EVALUATED                               │
└─────────────────────────────────────┘
            │
            ▼
        ( END )
```

# FIG. 9

START

DEFINE OBJECTIVE FUNCTION EXPRESSION OF
EXPRESSION (1) BASED ON INDIVIDUAL
(DATA VALUE) TO BE EVALUATED — S401

PERFORM INTENSIVE OPTIMIZATION SUFFICIENT TO
REACH OPTIMAL SOLUTION WITH LARGE NUMBER
SET AS NUMBER OF ANNEALING ITERATIONS FOR — S402
OBJECTIVE FUNCTION EXPRESSION BASED ON
INDIVIDUAL TO BE EVALUATED

SET ENERGY VALUE OF OBJECTIVE FUNCTION
EXPRESSION OBTAINED BY OPTIMIZATION AS
EVALUATION VALUE OF INDIVIDUAL TO BE — S403
EVALUATED

END

# FIG. 10

START

PREPARE PLURAL OBJECTIVE FUNCTION EXPRESSIONS IN WHICH CONTINUOUS VARIABLES ARE SET RANDOMLY — S501

OPTIMIZE OBJECTIVE FUNCTION EXPRESSION IN WHICH CONTINUOUS VARIABLES ARE SET RANDOMLY WHILE CHANGING NUMBER OF ANNEALING ITERATIONS — S502

OUTPUT ENERGY VALUE OF OBJECTIVE FUNCTION EXPRESSION OBTAINED BY OPTIMIZATION — S503

ARE OPTIMIZATIONS OF ALL PREPARED OBJECTIVE FUNCTION EXPRESSIONS COMPLETED? — S504

NO

YES

SET NUMBER OF ITERATIONS WITH WHICH ENERGY VALUES OF ALL OBJECTIVE FUNCTION EXPRESSIONS HAVE NO CHANGE AS NUMBER OF ITERATIONS FOR INTENSIVE EVALUATION SUFFICIENT TO REACH OPTIMAL SOLUTION (SUB-FLOW 2) — S505

SET NUMBER OF ITERATIONS WITH CALCULATION TIME SUFFICIENTLY SHORTER THAN THAT OF INTENSIVE EVALUATION SUFFICIENT TO REACH OPTIMAL SOLUTION AS NUMBER OF ITERATIONS FOR SHORT-TIME SIMPLE EVALUATION (SUB-FLOW 1) — S506

END

# FIG. 11

```
                    ┌─────────────┐
                    │    START    │
                    └─────────────┘
                           │
                           ▼
        ┌──────────────────────────────────────┐
        │  PREPARE PLURAL OBJECTIVE FUNCTION    │  ⌒ S601
        │  EXPRESSIONS DIFFERENT IN STEP SIZE t │
        └──────────────────────────────────────┘
                           │
        ┌──────────────────┼
        │                  ▼
        │  ┌──────────────────────────────────────┐
        │  │  GENERATE CHILDREN BY USING ONLY      │
        │  │  SHORT-TIME SIMPLE EVALUATION         │  ⌒ S602
        │  │  (SUB-FLOW 1) FOR OBJECTIVE FUNCTION  │
        │  │  EXPRESSION WITH CERTAIN STEP SIZE t  │
        │  └──────────────────────────────────────┘
        │                  │
        │                  ▼
        │           ╱──────────────╲   ⌐ S603
        │  NO     ╱   IS GENERATION   ╲
        └───────╱ OF CHILDREN COMPLETED ╲
                ╲  FOR ALL PREPARED      ╱
                 ╲ OBJECTIVE FUNCTION   ╱
                  ╲  EXPRESSIONS?      ╱
                   ╲──────────────────╱
                           │ YES
                           ▼
        ┌──────────────────────────────────────┐
        │  DETERMINE STEP SIZE t THAT GIVES     │
        │  LOWEST FINAL ENERGY VALUE TO         │
        │  OBJECTIVE FUNCTION EXPRESSION        │  ⌒ S604
        │  CONCERNING CHILDREN GENERATED BY     │
        │  USING GENETIC ALGORITHM              │
        └──────────────────────────────────────┘
                           │
                           ▼
        ┌──────────────────────────────────────┐
        │  SET SUB-FLOW SWITCHING VALUE S TO    │
        │  GENERATION NUMBER HAVING NO CHANGE   │
        │  IN ENERGY VALUE IN OPTIMIZATION      │  ⌒ S606
        │  WITH STEP SIZE t THAT GIVES LOWEST   │
        │  ENERGY VALUE TO OBJECTIVE FUNCTION   │
        │  EXPRESSION                           │
        └──────────────────────────────────────┘
                           │
                           ▼
                    ┌─────────────┐
                    │     END     │
                    └─────────────┘
```

# FIG. 12A

START

S701

GENERATE INITIAL POPULATION

S702

PERFORM SHORT-TIME SIMPLE EVALUATION
(SUB-FLOW 1) FOR EACH INDIVIDUAL IN INITIAL
POPULATION

S703

RANDOMLY SELECT PLURAL INDIVIDUALS TO BE
PARENTS FROM INDIVIDUALS IN INITIAL POPULATION
(JGG)

S707

REPLACE PARENTS WITH
INDIVIDUALS HAVING
HIGH EVALUATIONS (JGG)

S704

PERFORM CROSSOVER USING REX$^{star}$ TO GENERATE
CHILD POPULATION

S705

PERFORM SHORT-TIME SIMPLE EVALUATION
(SUB-FLOW 1) FOR EACH INDIVIDUAL IN CHILD
POPULATION

S706

NO — DOES GENERATION
NUMBER OF CHILDREN REACH
UPPER LIMIT?

YES

TO S708

# FIG. 12B

FROM S706

DEFINE OBJECTIVE FUNCTION EXPRESSION OF EXPRESSION (1) BASED ON INDIVIDUAL HAVING HIGHEST EVALUATION RESULT IN CHILD POPULATION — S708

CONVERT OBJECTIVE FUNCTION EXPRESSION INTO ISING MODEL EXPRESSION OF EXPRESSION (2) — S709

MINIMIZE EXPRESSION (2) BY USING ANNEALING MACHINE — S710

OUTPUT ENERGY VALUE OF OBJECTIVE FUNCTION EXPRESSION AND GENERATION NUMBER — S711

END

# FIG. 13

300

# FIG. 14

SELECT ONE STATE TRANSITION AS CANDIDATE ~ S0001

DETERMINE WHETHER STATE TRANSITION IS ACCEPTABLE BY COMPARING ENERGY CHANGE VALUE ALONG WITH STATE TRANSITION AND PRODUCT OF TEMPERATURE VALUE AND RANDOM NUMBER VALUE ~ S0002

ACCEPT STATE TRANSITION IF IT IS ACCEPTABLE OR REJECT IT IF IT IS NOT ACCEPTABLE ~ S0003

# FIG. 15

# FIG. 16

# FIG. 17

| STATE VARIABLE | MAGNETIZATION DIRECTION |
|:---:|:---:|
| $S_{j,1}$ | POSITIVE DIRECTION OF x-AXIS |
| $S_{j,2}$ | NEGATIVE DIRECTION OF x-AXIS |
| $S_{j,3}$ | POSITIVE DIRECTION OF y-AXIS |
| $S_{j,4}$ | NEGATIVE DIRECTION OF y-AXIS |
| $S_{j,5}$ | POSITIVE DIRECTION OF z-AXIS |
| $S_{j,6}$ | NEGATIVE DIRECTION OF z-AXIS |

# FIG. 18

# FIG. 19

# FIG. 20

# FIG. 21

# FIG. 22

# FIG. 23

## FIG. 24

MAIN FLOW
(DA × GA)

DIVIDE
PROBLEM

OPTIMIZATION
PROBLEM INCLUDING
CONTINUOUS
VARIABLES AND
DISCRETE VARIABLES

OPTIMIZATION PROBLEM
OF CONTINUOUS
VARIABLES

OPTIMIZATION
PROBLEM OF DISCRETE
VARIABLES

DATA VALUES OF
CONTINUOUS
VARIABLES OF
OPTIMAL
INDIVIDUAL

GA

EVALUATION
VALUES OF GA
INDIVIDUALS

DATA VALUES OF
CONTINUOUS
VARIABLES OF
GA INDIVIDUALS

DA

OPTIMIZATION
RESULT

SUB 1 OR SUB 2

CHANGE SUB-FLOW
ACCORDING TO
GENERATION IN GA

FIG. 25

LEARNING

ARBITRARY
CONTINUOUS
VARIABLES

DA

DA ITERATION COUNT

OPTIMIZATION
PROBLEM

SUB 1 × GA

STEP SIZE t
SUB-SWITCHING VALUE S

LEARNED
PARAMETERS

SUB 1 ITERATION COUNT

OPERATION

OPTIMIZATION
PROBLEM

DA × GA
MAIN FLOW

OPTIMIZATION
RESULT

Europäisches
Patentamt

European
Patent Office

Office européen
des brevets

# EUROPEAN SEARCH REPORT

**Application Number**

EP 21 19 3224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FATYANOSA TIRANA NOOR ET AL: "Hybrid Genetic Algorithm and Simulated Annealing for Function Optimization", JOURNAL OF INFORMATION TECHNOLOGY AND COMPUTER SCIENCE, vol. 1, no. 2, 9 February 2017 (2017-02-09), pages 1-16, XP055890759, ISSN: 2540-9433, DOI: 10.25126/jitecs.20161215 Retrieved from the Internet: URL:https://www.researchgate.net/profile/Tirana-Fatyanosa/publication/313478678_Hybrid_Genetic_Algorithm_and_Simulated_Annealing_for_Function_Optimization/links/589c4ed3aca2721ae1b9d05c/Hybrid-Genetic-Algorithm-and-Simulated-Annealing-for-Function-Optimization.pdf> * page 8; figure 5 * ----- | 1-8 | INV. G06F17/11 G06N5/00 G06Q10/04 G06N3/12 |
| A | MALIHEH ARAMON ET AL: "Physics-Inspired Optimization for Quadratic Unconstrained Problems Using a Digital Annealer", ARXIV.ORG, CORNELL UNIVERSITY LIBRARY, 201 OLIN LIBRARY CORNELL UNIVERSITY ITHACA, NY 14853, 22 June 2018 (2018-06-22), XP081200633, DOI: 10.3389/FPHY.2019.00048 * the whole document * ----- | 1-8 | TECHNICAL FIELDS SEARCHED (IPC) G06F G06N G06Q |

-/--

The present search report has been drawn up for all claims

| Place of search | Date of completion of the search | Examiner |
|---|---|---|
| Berlin | 11 February 2022 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 21 19 3224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Kartika Ariyani Amalia ET AL: "Hybrid genetic algorithms and simulated annealing for multi-trip vehicle routing problem with time windows", International Journal of Electrical and Computer Engineering, December 2018 (2018-12), pages 4713-4723, XP055890767, DOI: 10.11591/ijece.v8i6.pp.4713-4723 Retrieved from the Internet: URL:https://www.researchgate.net/profile/Amalia-Ariyani/publication/329375959_Hybrid_genetic_algorithms_and_simulated_annealing_for_multi-trip_vehicle_routing_problem_with_time_windows/links/5cd52d59458515712ea0764a/Hybrid-genetic-algorithms-and-simulated-annealing-for-multi-trip-vehicle-routing-problem [retrieved on 2022-02-11] * the whole document * | 1-8 | |
| A | US 2020/166900 A1 (KOYAMA JUMPEI [JP] ET AL) 28 May 2020 (2020-05-28) * the whole document * | 1-8 | TECHNICAL FIELDS SEARCHED (IPC) |

The present search report has been drawn up for all claims

| Place of search | Date of completion of the search | Examiner |
|---|---|---|
| Berlin | 11 February 2022 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 3224

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2022

| Patent document cited in search report | | Publication date | Patent family member(s) | | Publication date |
|---|---|---|---|---|---|
| US 2020166900 | A1 | 28-05-2020 | CN | 111210046 A | 29-05-2020 |
| | | | EP | 3660705 A1 | 03-06-2020 |
| | | | JP | 2020086821 A | 04-06-2020 |
| | | | US | 2020166900 A1 | 28-05-2020 |

EPO FORM P0459

For more details about this annex : see Official Journal of the European Patent Office, No. 12/82

**EP 4 009 200 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11295098 A

### Non-patent literature cited in the description

- **SHIGENOBU KOBAYASHI.** The Frontiers of Real-coded Genetic Algorithms. *Journal] Artificial Intelligence,* 2009, vol. 24 (1), 147-162
- Genetic Algorithms for Real-Coded Parameter Optimization (Japanese). Seminar Material (Kimura). Department of Marine Systems Engineering, Graduate School of Engineering, Kyushu University
- A Study on Design Optimization of Electric Devices and Machines Based on Electromagnetic Field Analysis (Japanese). **TAKAHIRO SATO.** Doctor's Thesis in Annual Year 2014. Division of Systems and Information Engineering, Graduate School of Information Science and Technology, Hokkaido University, 2015
- **A. MARUO ; H. IGARASHI ; H. OSHIMA ; S. SHIMOKAWA.** Optimization of Planar Magnet Array Using Digital Annealer. *IEEE Transactions on Magnetics,* March 2020, vol. 56 (3), 1-4